(19) Europäisches Patentamt
European Patent Office
Office européen des brevets

(11) **EP 1 810 821 A1**

(12) **EUROPEAN PATENT APPLICATION**
published in accordance with Art. 158(3) EPC

(43) Date of publication:
**25.07.2007 Bulletin 2007/30**

(21) Application number: **05805988.2**

(22) Date of filing: **11.11.2005**

(51) Int Cl.:
**B32B 27/30** (2006.01)     **B29C 61/06** (2006.01)
**B32B 27/36** (2006.01)     **B65D 25/36** (2006.01)
**B65D 65/40** (2006.01)     **G09F 3/04** (2006.01)

(86) International application number:
**PCT/JP2005/020754**

(87) International publication number:
**WO 2006/051920 (18.05.2006 Gazette 2006/20)**

(84) Designated Contracting States:
**GB PL**

(30) Priority: **11.11.2004  JP 2004327984**

(71) Applicant: **MITSUBISHI PLASTICS, INC.**
**Chiyoda-ku,**
**Tokyo 100-0005 (JP)**

(72) Inventors:
• **HIRUMA, Takashi.,**
**Nagahama Plant of Mitsubishi Plastics**
**Shiga 5268660 (JP)**
• **YAMADA, Takeyoshi.,**
**Nagahama Plant of Mitsubishi Plantics**
**Shiga 5268660 (JP)**

• **TANAKA, Yukihiro.,**
**Nagahama Plant of Mitsubisi Plantics**
**Shiga 6258660 (JP)**
• **MIYASHITA, You**
**Nagahama Plant of Mitsubishi Plantic**
**Shiga 5268660 (JP)**
• **TAKAGI, Jun.,**
**Nagahama Plant of Mitsubishi Plastics**
**Shiga 5268660 (JP)**

(74) Representative: **Hatt, Anna Louise**
**Beck Greener**
**Fulwood House**
**12 Fulwood Place**
**London WC1V 6HR (GB)**

(54) **HEAT-SHRINKABLE LAMINATED FILM, AND MOLDED ARTICLES, HEAT-SHRINKABLE LABELS AND CONTAINERS, MADE BY USING THE FILM**

(57)     The present invention provides a heat-shrinkable laminated film which exhibits excellent breakage resistance, stiffness and shrink finishing quality, and provides a molded product and heat-shrinkable label using the films, and a container. The heat-shrinkable laminated film is made of an A layer mainly constituted of a polyester series resin and a B layer mainly constituted of a polystyrene series resin, respectively used as front and back layers and an intermediate layer, in which a peak temperature of the loss elastic modulus ($E_A''$) of a resin that constitutes the A layer exists at least one in the range of 50˚C or more and 90˚C or less; the storage elastic moduli ($E_A'$) at 0˚C and 40˚C satisfy $E_A'(0)/E_A'(40) \leq 1.2$, and the storage elastic moduli ($E_B'$) at 50˚C and 90˚C of the resin that constitutes the B layer satisfy $E_B'(50) \geq 1.5 \times 10^8 Pa$ and $E_B'(90) \geq 5.0 \times 10^7 Pa$; storage elastic modulus curves of $E_A'$ and $E_B'$ intersect with each other; and the thermal shrinkage ratio in a main shrinkage direction of the film when the film is dipped in a hot water at 80˚C for 10 sec is 30% or more and 60% or less, and the thermal shrinkage ratio in a direction perpendicular to the main shrinkage direction is -5% or more and +5% or less in the range of 70˚C or more and 80˚C or less.

**EP 1 810 821 A1**

## Description

Technical Field

The present invention relates to a heat-shrinkable laminated film, a molded product and a heat-shrinkable label employing the film, and a container. In more detail, the present invention relates to a heat-shrinkable laminated film which exhibits excellent low-temperature shrinkability, stiffness, rupture-resistance and shrink finishing quality, and particularly suitable for heat-shrinkable labels and the like and containers provided therewith.

Background Art

At present, for a heat-shrinkable film for shrinkable labels of plastic containers (mainly PET bottles), polyester series and polystyrene series heat-shrinkable films are mainly used. The polyester series heat-shrinkable film exhibits excellent low-temperature shrinkability, small natural shrinkage ratio and excellent stiffness. However, in the polyester series heat-shrinkable film, there are problems in that uniform shrinkage cannot be obtained, shrinkage irregularities, poor shrink finishing quality or the like are caused. Furthermore, in the applications such as labels or the like, there is a problem in that the shrinkage is caused in a direction perpendicular to a main shrinking direction of the film thereby causes poor appearance.

On the other hand, as the polystyrene series heat-shrinkable film, a polystyrene series heat-shrinkable film mainly made of a styrene-butadiene block copolymer (SBS) is used. The polystyrene series heat-shrinkable film exhibits excellent shrink finishing quality. However, there is a problem in that, when the low-temperature shrinkability is imparted, the natural shrinkage ratio becomes larger. Further, during printing and bag-making, a problem in that the film itself is deteriorated due to a solvent in the printing to be broken is made apparent as well. Furthermore, in the polystyrene series heat-shrinkable film mainly made of a styrene-butadiene block copolymer (SBS), when butadiene that is a rubber component is increased, the rupture-resistance can be sufficiently improved. However, in that case, the stiffness of the film is deteriorated to result in incompatibility between the stiffness and the rupture-resistance.

On the other hand, a laminated film having a three-kind five-layer configuration, in which each of both outer layers made of a polyester series resin is laminated through an adhesive layer to an intermediate layer made of a polystyrene series resin, is proposed as well (for instance, patent document 1). In the film with five layers, since the compatibility between a vinyl aromatic hydrocarbon and a conjugate diene derivative of an inner layer and an ethylene-vinyl acetate copolymer in the adhesive layer is poor, there is a problem in that when a recycled resin obtained by trimming loss or the like such as heels of films is added (hereinafter, referred to as "addition of a reclamation material"), the transparency of the entire film tends to be deteriorated. Furthermore, a laminated film where a polystyrene series resin is used as an intermediate layer and a polyester series resin containing 1,4-cyclohexane dimethanol is used in outer layers is proposed (such as patent documents 2 and 3). However, the laminated film described in patent document 2isinsufficientintherupture-resistance. Furthermore, the film described in patent document 3 is insufficient in the shrink finishing quality and the transparency after the addition of a reclamation material as well.

Patent document 1: Japanese Patent Application Laid-Open (JP-A) No. 61-41543
Patent document 2: JP-A No. 07-137212
Patent document 3: JP-A No. 2002-351332

Disclosure of the Invention

Problems to be solved by the Invention

The invention was carried out in view of the above problems of the conventional art and an object of the present invention is to provide a heat-shrinkable laminated film which exhibits excellent low-temperature shrinkability, stiffness, rupture-resistance, transparency after the addition of a reclamation material and shrink finishing quality.

Another object of the invention is to provide a molded product and a heat-shrinkable label using the heat-shrinkable laminated film which exhibits excellent rupture-resistance, transparency and shrink finishing quality, and to provide a container provided with the molded product or the label.

Means for Solving the Problem

In order to overcome the problems, the inventors have been conducted serious studies on a layer configuration of a polyester series resin and a polystyrene series resin and on the viscoelastic characteristics from the viewpoint of securing the stiffness, rupture-resistance and transparency after the addition of a reclamation material, and completed the invention.

That is, objects of the invention can be achieved with a heat-shrinkable laminated film that is made of at least three layers with an A layer mainly constituted of a polyester series resin and a B layer mainly constituted of a polystyrene series resin, respectively used as front and back layers and an intermediate layer or an intermediate layer and front and back layers, and is stretched at least in monoaxial direction, and the film has features (1) to (4) below.

(1) A peak temperature of loss elastic modulus ($E_A''$) of a resin that constitutes the A layer exists at least one in the range of 50˚C or more and 90˚C or less and storage elastic moduli ($E_A'$) at 0˚C and 40˚C of the resin that constitutes the A layer satisfy an expression (I) below,

$$E_A'(0)/E_A'(40) \leqq 1.2 \quad \ldots \text{ Expression (I)}$$

(Herein, $E_A'(0)$ and $E_A'(40)$, respectively, express storage elastic moduli at 0˚C and 40˚C of the resin that constitutes the A layer.),

(2) storage elastic moduli ($E_B'$) at 50˚C and 90˚C of the resin that constitutes the B layer satisfy expressions (II) and (III) below,

$$E_B'(50) \geqq 1.5 \times 10^8 Pa \quad \ldots \text{ Expression (II)}$$

$$E_B'(90) \geqq 5.0 \times 10^7 Pa \quad \ldots \text{ Expression (III)}$$

(Herein, $E_B'(50)$ and $E_B'(90)$, respectively, express storage elastic moduli at 50˚C and 90˚C of the resin that constitutes the B layer.),

(3) storage elastic modulus curves of $E_A'$ and $E_B'$ intersect with each other, and

(4) the thermal shrinkage ratio in a main shrinking direction of the film when the film is dipped in a hot water at 80˚C for 10 seconds is 30% or more and 60% or less, and the thermal shrinkage ratio in a direction perpendicular to the main shrinking direction of the film is -5% or more and 5% or less in the range of 70˚C or more and 80˚C or less.

In a preferable aspect of the film of the present invention, the storage elastic modulus curves of the $E_A'$ and $E_B'$ intersect between a temperature lower by 10˚C than a peak temperature of the loss elastic modulus ($E_A''$) of a resin constituting the A layer and 90˚C, and the loss elastic modulus at the intersection is preferably in the range of 1 x 10^8Pa or more and 1 x 10^9Pa or less.

In a preferable aspect of the film of the invention, it is preferred that the A layer forms front and back layers and the B layer forms an intermediate layer.

In a preferable aspect of the film of the invention, as the polyester series resin, at least one kind selected from a group consisting of polyester resins constituted of a dicarboxylic acid residue and a diol residue, copolymer polyester resins, polylactate series polymers, or mixture thereof can be used.

In a preferable aspect of the film of the invention, as the polyester series resin, polyester resins constituted of a dicarboxylic acid residue and a diol residue, in which at least one of the dicarboxylic acid residue and diol residue is constituted of at least two kinds of residues, and, among the at least two kinds of the residues, a total content of the residues excluding the most abundant residue is 10 mole % or more and 40 mole % or less to a sum total (200 mole %) of a sum total (100 mole %) of the dicarboxylic acid residue and a sum total (100 mole %) of the diol residue, can be used.

In a preferable aspect of the film of the invention, polyester resins, in which the dicarboxylic acid residue is at least one kind of residue selected from a group consisting of a terephthalic acid residue, an isophthalic acid residue, a 1,4-cyclohexane dicarboxylic acid residue, a succinic acid residue, an adipic acid residue and a 2, 6-naphthalene dicarboxylic acid residue, and the diol residue is at least one kind of residue selected from a group consisting of an ethylene glycol residue, a 1,2-propylene glycol residue, a 1,4-butanediol residue, a neopentyl glycol residue, a diethylene glycol residue, a polytetramethylene glycol residue and a 1,4-cyclohexane dimethanol residue can be preferably used.

In a preferable aspect of the film of the invention, it is preferred that the polystyrene series resin is a copolymer of a styrene series hydrocarbon and a conjugate dien series hydrocarbon, and a content of the copolymer in the entire B layer is 50 mass % or more.

In a preferable aspect of the film of the invention, at least one layer of an adhesive layer may be disposed between the A layer and the B layer.

Another object of the invention can be achieved by molded products and heat-shrinkable labels that employ the heat-shrinkable laminated film as a base material, and containers provided with the molded products or the heat-shrinkable labels.

Effect of the Invention

The film of the invention, in a laminated film of at least three layers made of an A layer and a B layer having different viscoelastic characteristics, since a lamination structure and the viscoelastic characteristics are controlled, can provide a heat-shrinkable laminated film which exhibits excellent low-temperature shrinkability, stiffness, rupture-resistance, transparency after the addition of a reclamation material and shrink finishing quality.

Furthermore, when the heat-shrinkable laminated film is used as a base material, according to the invention, molded products, heat-shrinkable labels and containers provided with the molded products or the labels, each of which exhibits excellent transparency, rupture-resistance and shrink finishing quality, can be provided.

Brief Description of the Drawings

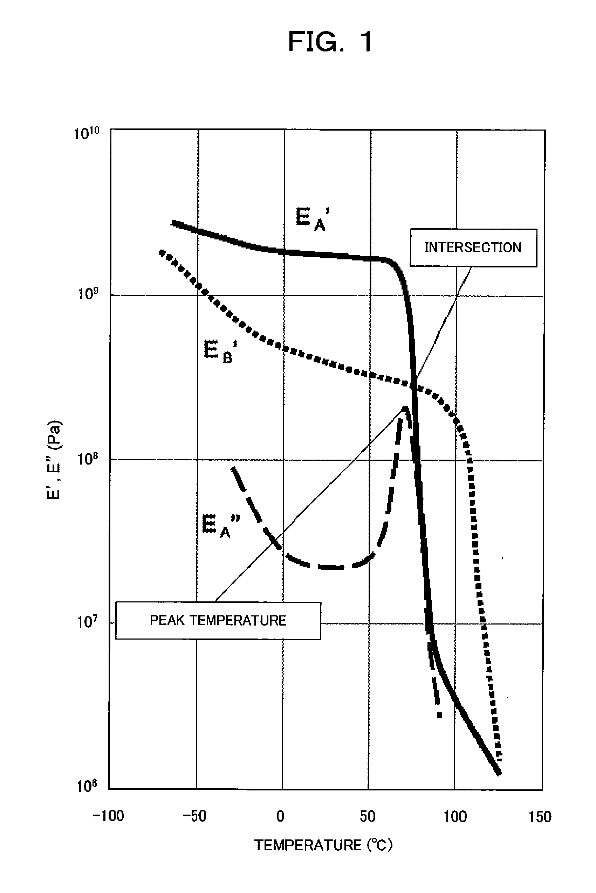

FIG. 1 is an explanatory diagram showing the viscoelastic characteristics in the film of the invention. Best Mode for Carrying Out the Invention

Hereinafter, the film, molded product, heat-shrinkable label and container of the invention will be described in detail.

[a heat-shrinkable laminated film]

The film of the present invention is a heat-shrinkable laminated film that is made of at least three layers having an A layer mainly constituted of a polyester series resin and a B layer mainly constituted of a polystyrene series resin respectively used as front and back layers and an intermediate layer or an intermediate layer and front and back layers, and is stretched at least in monoaxial direction and has features (1) to (4) below.

(1) A peak temperature of the loss elastic modulus ($E_A''$) of a resin that constitutes the A layer exists at least one in the range of 50˚C or more and 90˚C or less and the storage elastic moduli at 0˚C and 40˚C of a resin that constitutes the A layer satisfy an expression (I) below,

$$E_A'(0)/E_A'(40) \leqq 1.2 \quad \ldots \text{Expression (I)}$$

(Herein, $E_A'(0)$ and $E_A'(40)$, respectively, express storage elastic moduli at 0˚C and 40˚C of the polyester resin.), (2) the storage elastic moduli at 50˚C and 90˚C of the resin that constitutes the B layer satisfy expressions (II) and (III) below,

$$E_B'(50) \geqq 1.5 \times 10^8 Pa \quad \ldots \text{Expression (II)}$$

$$E_B'(90) \geqq 5.0 \times 10^7 Pa \quad \ldots \text{Expression (III)}$$

(Herein, $E_B'(50)$ and $E_B'(90)$, respectively, express storage elastic moduli at 50˚C and 90˚C of the resin that constitutes the B layer.), (3) storage elastic modulus curves of $E_A'$ and $E_B'$ intersect with each other, and (4) the thermal shrinkage ratio in a main shrinking direction of the film when the film is dipped in a hot water at 80˚C for 10 seconds is 30% or more and 60% or less and the thermal shrinkage ratio in a direction perpendicular to the main shrinking direction of the film is -5% or more and +5% or less in the range of 70˚C or more and 80˚C or less.

In the film of the invention, in the shrinkage characteristics, a variation of the thermal shrinkage ratio in a main shrinking direction of the film is controlled within a predetermined range, and layers of different material systems are laminated. Thereby, to the film, the rupture-resistance and stiffness can be imparted and simultaneously the low-temperature shrinkability can be imparted, and, while maintaining small natural shrinkability (dimensional stability), excellent shrink finishing quality can be imparted. As mentioned above, it is not generally easy to obtain a heat-shrinkable film that satisfies the mechanical properties such as the rupture-resistance, stiffness and the like, and, at the same, satisfies excellent shrink finishing quality while maintaining small natural shrinkability.

In the film of the invention, at least two kinds of layers constituted of different kinds of resins having particular different viscoelastic characteristics are laminated, and thereby the difficulties are overcome. That is, in the film of the invention, the A layer mainly constituted of a polyester series resin mainly works so as to impart, to the film, the stiffness and rupture-resistance and, while imparting the low-temperature shrinkage, suppress the natural shrinkage. The B layer mainly constituted of a polystyrene series resin mainly works so as to make the shrink finishing quality excellent.

In the film of the invention, an A layer has the viscoelastic characteristics below.

a. A peak temperature of the loss elastic modulus ($E_A$") exists at least one in the range of 50˚C or more and 90˚C or less.
b. The storage elastic moduli ($E_A$') at 0˚C and 50˚C satisfy an expression (I) below.

$$E_A'(0)/E_A'(40) \leqq 1.2 \quad \text{... Expression (I)}$$

In the expression (I), $E_A'(0)$ and $E_A'(40)$, respectively, express storage elastic moduli at 0˚C and 40˚C.

FIG. 1 is a schematic diagram showing the viscoelastic characteristics of a resin that constitutes the A layer of the film of the invention and the viscoelastic characteristics of a resin that constitutes the B layer thereof. In FIG. 1, a horizontal axis shows a temperature (˚C) and a vertical axis shows the loss elastic modulus (E") and storage elastic modulus (E') (Pa). In FIG. 1, $E_A$" and $E_A$', respectively, show the loss elastic modulus and the storage elastic modulus of the resin that constitutes the A layer; $E_B$" and $E_B$', respectively, show the loss elastic modulus and the storage elastic modulus of the resin that constitutes the B layer.

As shown in FIG. 1, in the film of the invention, a peak temperature of the loss elastic modulus ($E_A$") of the resin that constitutes the A layer exists at least one in the range of 50˚C or more and 90˚C or less (condition a). When the peak temperature exists in the range, the low-temperature shrinkability and small natural shrinkability can be imparted to the film of the invention. A shrinkage start temperature of the heat-shrinkable film, though controllable by a stretching temperature as well, can be almost determined mainly by the peak temperature of the loss elastic modulus (E") of the resin that constitutes the film. Accordingly, when the peak is controlled to a temperature where the shrinkage is wanted to start, the shrinkage start temperature can be controlled. Mainly, in the heat-shrinkable film for labels of bottles, the shrinkage start temperature is 50˚C or more, preferably 55˚C or more and more preferably 60˚C or more, and 90˚C or less, preferably 85˚C or less and more preferably 80˚C or less. When the peak temperature is 50˚C or more, the shrinkage does not start at a relatively low temperature; accordingly, the dimensional stability during the transportation can be maintained. On the other hand, when the peak temperature is 90˚C or less, during labeling to bottles, shrinkage deficiency is not caused.

Furthermore, the film of the invention is as well important for the storage elastic moduli (E') at 0˚C and 40˚C of the resin that constitutes the A layer to satisfy an expression (I) below (condition b).

$$E_A'(0)/E_A'(40) \leqq 1.2 \quad \text{... Expression (I)}$$

In the expression (I), $E_A'(0)$ and $E_A'(40)$, respectively, express storage elastic moduli at 0 and 40˚C of the resin that constitutes the A layer.

The expression (I) defines the thermal characteristics at temperatures between 0˚C to 40˚C, that is, up to the neighborhood of the shrinkage start temperature and can be adopted mainly as an index that expresses the dimensional stability of the film of the invention. Specifically, the expression (I) defines variation of the storage elastic modulus (E') at temperatures from 0˚C to 40˚C and the heat-shrinkable film thermally shrinks corresponding to variation of the elastic modulus from the characteristics thereof. In other words, in a producing step of the film, when the stretching is applied at a temperature equal to or higher than the peak temperature of the loss elastic modulus (E") followed by lowering to a temperature lower than the peak temperature, the thermal shrinkage is not fundamentally caused. However, when the storage elastic modulus (E') varies at a temperature equal to or lower than the peak temperature of the loss elastic modulus (E"), in particular, when the storage elastic modulus (E') decreases in the course of temperature-up, the film tends to shrink. Accordingly, when, during, for instance, transportation or printing before labeling, the storage elastic modulus (E') is caused to vary owing to a temperature variation of the environment, the film is shrunk to cause the natural shrinkage (that is, the dimensional stability is deteriorated).

The present inventors found out that, when the temperature variation of the storage elastic modulus (E') of the resin that constitutes the A layer was suppressed equal to or less than the expression (I) in the above temperature range (condition b), practically no problem was caused of the shrinkage characteristics. In the expression (I), a ratio $(E_A'(0)/E_A'(40))$ of the storage elastic modulus at 0°C $(E_A'(0))$ to that at 40°C $(E_A'(40))$ is 1.2 or less, preferably 1.15 or less and more preferably 1.1 or less. When the ratio of the storage elastic moduli at 0°C and 40°C is 1.2 or less, the natural shrinkage accompanying the temperature variation of the environment can be inhibited from occurring. Furthermore, the ratio $(E_A'(0)/E_A'(40))$ of the storage elastic modulus at 0°C $(E_A'(0))$ to that at 40 °C $(E_A'(40))$ is necessarily larger than 1.0. This is because, in the case of the ratio being 1.0 or less, when the temperature is raised, the storage elastic modulus is not decreased to be unsuitable as the heat-shrinkable film.

The film of the invention, as mentioned above, due to the viscoelastic characteristics that the resin constituting the A layer has, can control the shrinkage start temperature and small natural shrinkability. However, when the film is formed only of the A layer, the shrink finishing quality thereof are largely deteriorated. In this connection, in order to impart the shrink finishing quality to the film, a layer capable of imparting the shrink finishing quality is further laminated to the A layer to share the function in the respective layers, and thereby a film having excellent shrinkage characteristics can be designed.

That is, in the film of the invention, the B layer that imparts the shrink finishing quality to the A layer is further laminated. In the film of the invention, the B layer is a layer mainly made of a polystyrene series resin and has the viscoelastic characteristics shown by expressions (II) and (III) below (condition c).

$$E_B'(50) \geqq 1.5 \times 10^8 Pa \quad ... \text{ Expression (II)}$$

$$E_B'(90) \geqq 5.0 \times 10^7 Pa \quad ... \text{ Expression (III)}$$

In (II) and (III), $E_B'(50)$ and $E_B'(90)$, respectively, express storage elastic moduli at 50°C and 90°C of the resin that constitutes the B layer.

The storage elastic modulus at 50°C $(E_B'(50))$ of the resin that constitutes the B layer is 1.5 x $10^8$Pa or more, preferably 3. 0 x $10^8$Pa or more and more preferably 4.0 x $10^8$Pa or more. When the $E_B'(50)$ is 1.5 x $10^8$Pa or more, to an entire film, excellent stiffness can be imparted. Furthermore, the storage elastic modulus at 50°C $(E_B'(50))$ is 2.0 x $10^9$Pa or less and preferably 1.5 x $10^9$Pa or less. When the $E_B'(50)$ is 2.0 x $10^9$Pa or less, a resin that constitutes the B layer is preferable because the film is not too hard and does not deteriorate the rupture-resistance of the film as a whole.

The storage elastic modulus at 90°C $(E_B'(90))$ of the resin that constitutes the B layer is 5.0 x $10^7$ Pa or more, preferably 5. 5 x $10^7$ Pa or more and more preferably 7.5 x $10^7$Pa or more. When the $E_B'(90)$ is 5.0 x $10^7$Pa or more, excellent elasticity can be maintained at high temperatures; accordingly, the bending of the film during shrink due to the deficiency of the elasticity and wrinkle and bending after shrink can be suppressed from generating. Furthermore, the storage elastic modulus at 90°C $(E_B'(90))$ is 1.0 x $10^9$Pa or less and preferably 5.0 x $10^8$Pa or less. When the $E_B'(90)$ is 1. 0 x $10^9$Pa or less, since the stretching temperature can be set in the predetermined range, the thermal shrinkage ratio at 80°C can be contained in the range of the invention.

In the film of the invention, other than satisfying the conditions a, b and c, it is as well important that a storage elastic modulus curve of $E_A'$ and a storage elasticmodulus curve of $E_B'$ intersect each other (condition d). That is, when the conditions a through d are satisfied, excellent shrink finishing quality can be imparted to the film.

When, as shown in FIG. 1, the A and B layers are constituted of resins different in the storage elastic modulus curve, in a low temperature region in the neighborhood of the peak temperature of the loss elastic modulus $(E_A'')$ of the resin constituting the A layer, the storage elastic modulus curves of the A and B layers exhibit different behavior. However, when a resin that constitutes the B layer is selected so that, at a temperature equal to or higher than the peak temperature of the loss elastic modulus $(E_A'')$ of the resin constituting the A layer, a storage elastic modulus curve of a resin that constitutes an A layer and a storage elastic modulus curve of a resin that constitutes a B layer may intersect each other, the shrinkage start temperature is defined by the resin that constitutes the A layer, the shrinkage characteristics after the shrinkage start are made dependent on the resin that constitutes the B layer and, in a further higher temperature region, the storage elastic modulus of the resin that constitutes the B layer is maintained at a relatively high value, a slow decrease in the storage elastic modulus can be realized. As the result, the obtained film exhibits slow shrinkage characteristics and a balance with the shrinkage start temperature can be established.

The storage elastic modulus curves of the $E_A'$ and $E_B'$ intersect each other between a temperature lower by 10°C than a peak temperature $(T_{EAP})$ of the loss elastic modulus $(E_A'')$ of the resin that constitutes the A layer and 90°C (that is, ($T_{EAP}$ - 10°C) to 90°C) and preferably between a temperature lower by 5°C and 90°C (that is, ($T_{EAP}$ - 5°C) to 90°C) and has the loss elastic modulus at the intersection in the range of $1.0 \times 10^8$Pa or more and $1.0 \times 10^9$Pa or less and preferably in the range of $1.5 \times 10^8$Pa or more and $8.0 \times 10^8$Pa or less. When the intersection of the storage elastic modulus curves of the $E_A{}'$ and $E_B{}'$ is controlled in the range, in the case of the film being used in heat-shrinkable labels, slow shrinkage characteristics can be realized and excellent shrink finishing quality can be achieved.

When the film of the invention is used in the heat-shrinkable labels, the thermal shrinkage ratio in a main shrink direction of the film when dipped in hot water at 80°C for 10 sec is 30% or more and 70% or less, preferably 35% or more and 60% or less and more preferably 40% or more and 55% or less. When the thermal shrinkage ratio in the main shrink direction of the film at the temperatures is 30% or more, during bottles are labeled, the shrinkage deficiency can be suppressed from occurring and, when the upper limit of the thermal shrinkage ratio is set at 70% or less, wrinkles or the like due to abrupt shrinkage can be suppressed from occurring.

Furthermore, the film of the invention is, in the thermal shrinkage ratio in a direction perpendicular to the main shrinking direction of the film, in the range of 70° or more and 80°C or less, in the range of -5% or more and +5% or less, preferably in the range of -4% or more and +3% or less and more preferably in the range of -3% or more and +2% or less. When the thermal shrinkage ratio in a direction perpendicular to the main shrinking direction of the film in the range of 70°C or more and 80°C or less is -5% (expansion) or more, similarly, at the time of labeling bottles and the like, lateral wrinkles can be suppressed from occurring, and when the thermal shrinkage ratio at the temperature is 5% (shrink) or less, positional displacement accompanying abrupt shrinkage or the shrinkage in a vertical direction can be suppressed and thereby excellent appearance can be obtained.

Next, compositions of the respective layers that constitute the invention will be described in detailed.

<A Layer>

(Polyester Series Resin)

In the invention, a resin that is used to constitute an A layer is a polyester series resin. The kind of the polyester series resin is not particularly restricted. However, polyester resins derived from a dicarboxylic acid residue and a diol residue, copolymer polyester resins, polylactic acid obtained by polymerizing hydroxy carboxylic acid or mixture thereof can be preferably used.

In the polyester series resin that is preferably used as a resin that constitutes an A layer and derived from a dicarboxylic acid residue and a diol residue, examples of dicarboxylic acid residues include terephthalic acid, isophthalic acid, 2,6-naphthalene dicarboxylic acid, 1,4-cyclohexane dicarboxylic acid, succinic acid, glutaric acid, adipic acid, suberic acid, azelaic acid, sebacic acid and the like. Furthermore, examples of the diol residue include ethylene glycol, 1,2-propylene glycol, 1,4-butanediol, 1,5-pentanediol, 1,6-hexanediol, neopentyl glycol, diethylene glycol, triethylene glycol, polyethylene glycol, polytetramethylene glycol,1,4-cyclohexane dimethanol and the like. Preferably, terephthalic acid and ethylene glycol are used. The polyester resin, without restricting to simple element, may be copolymer polyester in which the dicarboxylic acid residue and diol residue, respectively, are constituted of at least two kinds, or a blend of the polyester series resins.

In the polyester series resin derived from the dicarboxylic acid residue and the diol residue, at least one of the dicarboxylic acid residue and the diol residue is preferably made of a mixture made of components of at least two kinds. In the specification, a residue most abundant (mole %) is taken as a first residue, and residues less abundant than the first residue are taken in a descending order as a second residue and so on (that is, a second residue, a third residue, ......). When the dicarboxylic acid residue and diol residue are formed of such a mixture system, the crystallinity of an obtained polyester resin can be controlled in a desired range and, even when the polyester resin is mixed in the A layer, the crystallization can be preferably suppressed from forwarding.

When the diol residue is a mixture made of at least two kinds thereof, as the first residue, an ethylene glycol residue is used, as the second residue, at least one kind selected from a group of a 1, 4-butanediol residue, a neopentyl glycol residue, a diethylene glycol residue, a polytetramethylene glycol residue and a 1,4-cyclohexane dimethanol residue is used. Among these, as the second residue, a 1,4-cyclohexane dimethanol residue is preferred.

Furthermore, when the preferable dicarboxylic acid residue is a mixture made of at least two kinds thereof, as the first residue, a terephthalic acid residue is used and, as the second residue, at least one kind selected from a group of an isophthalic acid residue, a 1,4-cyclohexanedicarboxylic acid residue, a succinic acid residue and an adipic acid residue is used. Among these, as the second residue, an isophthalic acid residue is preferred.

A total amount of the residues of the second residue and so on is, to the sum (200 mole %) of the total amount (100 mole %) of the dicarboxylic acid residues and the total amount (100 mole %) of the diol residues, 10 mole % or more and preferably 20 mole % or more and 40 mole % or less and preferably 35 mole % or less. When the total amount of the residues of the second residue and so on is 10 mole % or more, a polyester series resin composition having appropriate crystallinity can be obtained and, when the total amount of the residues of the second residue and so on is 40 mole % or less, the advantage of the first residue can be preferably used. When the ethylene glycol and 1,4-cyclohexane dimethanol residues are used, a content of the 1, 4-cyclohexanedimethanol residue is, to 100 mole % of a total of the ethylene glycol residue and the 1,4-cyclohexane dimethanol residue, in the range of 10 mole % or more and 40 mole % or less and preferably in the range of 25 mole % or more and 35 mole % or less. When the ethylene glycol and 1,4-cyclohexane dimethanol residues are used in such a content range, obtained polyester crystals almost lose the crystallinity, and the rupture-resistance as well can be improved.

In the invention, when the A layer is mainly constituted of a polyester resin constituted of a dicarboxylic acid residue and a diol residue and a copolymer polyester resin, in order to satisfy the conditions (a) and (b), an aromatic dicarboxylic acid residue is preferably used as the dicarboxylic acid residue. Among the aromatic dicarboxylic acid residues, when a terephthalic acid residue is used, an ethylene glycol residue can be more preferably combined and used as the diol residue. In that case, in order to maintain the peak temperature of the loss elastic modulus ($E_A"$) of a resin that constitutes the A layer in the range of 50˚C or more, preferably 60˚C or more and more preferably 65˚C or more and 90˚C or less and preferably 85˚C or less, the terephthalic acid residue is contained, to a total amount (100 mole %) of the dicarboxylic acid residue as a main component, preferably by 80 mole % or more and more preferably by 90 mole % or more.

In the case of the polyester and copolymer polyester resins being used, when analiphatic dicarboxylic acid residue is contained as the dicarboxylic acid residue, the peak temperature of the loss elastic modulus ($E_A"$) of a resin that constitutes the A layer can be shifted toward a lower temperature side. Furthermore, when a naphthalene dicarboxylic acid residue is contained as the dicarboxylic acid residue, the peak temperature of the loss elastic modulus ($E_A"$) of a resin that constitutes the A layer can be shifted toward a higher temperature side. At that time, as the aliphatic dicarboxylic acid residue, for instance, residues derived from succinic acid, glutaric acid, adipic acid, suberic acid, azelaic acid and sebacic acid can be cited. Among these, residues derived from succinic acid, glutaric acid, adipic acid and sebacic acid can be preferably used. Furthermore, when the aliphatic dicarboxylic acid and naphthalene dicarboxylic acid residues are contained, the crystallinity becomes higher. Accordingly, in order that the thermal shrinkage ratio of the obtained film may be inhibited from decreasing, a content of the residues is set, to a total amount (100 mole %) of the dicarboxylic acid residue, to 20 mole % or less and preferably to 10 mole % or less.

Furthermore, when an isophthalic acid residue is contained as the dicarboxylic acid residue as well, the peak temperature of the loss elastic modulus ($E_A"$) of a resin that constitutes the A layer can be controlled in the above range. In this case, from the molecular characteristics of isophthalic acid, the rupture-resistance of an entire A layer may be deteriorated. Accordingly, in order to control the crystallinity and to maintain the rupture-resistance, a content of the isophthalic acid residue is preferably set in the range of 5 mole % or more and 30 mole % or less.

On the other hand, as a first residue of the diol residue, an ethylene glycol residue is preferably used. In this case, in order to obtain appropriate crystallinity and rupture-resistance, a content of the ethylene glycol residue is 60 mole % or more, preferably 65 mole % or more and more preferably 70 mole % or more and 90 mole % or less, preferably 85 mole % or less and more preferably 80 mole % or less. Furthermore, in order to control the peak temperature of the loss elastic modulus ($E_A"$) and the rupture-resistance of a resin that constitutes the A layer, an aliphatic diol residue can be contained. When a straight chain aliphatic diol residue is contained, the peak temperature of the loss elastic modulus ($E_A"$) of a resin that constitutes the A layer can be shifted toward a lower temperature region. Furthermore, when an aliphatic diol residue having a branched chain such as a neopentyl glycol residue or an alicyclic diol residue such as a 1,4-cyclohexane dimethanol residue is contained, the peak temperature of the loss elastic modulus ($E_A"$) of a resin that constitutes the A layer can be shifted toward a higher temperature region. In particular, when, in addition to the ethylene glycol residue, a neopentyl glycol residue or a 1,4-cyclohexane dimethanol residue is contained, because of a structure thereof, the rupture-resistance of the film can be preferably improved. However, when the aliphatic diol residue is contained, the crystallinity is heightened; accordingly, in order to inhibit the thermal shrinkage ratio of the obtained film from deteriorating, a content of the aliphatic diol residue is set in the range of 10 mole % or more and 50 mole % or less, preferably in the range of 10 mole % or more and 40 mole % or less and more preferably in the range of 10 mole % or more and 30 mole % or less.

The lower limit value of a weight (mass) average molecular weight of a polyester resin used in the A layer is 30,000 or more and preferably 35,000 or more. Furthermore, the upper limit value thereof is 80,000 or less, preferably 75, 000 or less and more preferably 70, 000 or less. When the weight (mass) average molecular weight is 30,000 or more, appropriate cohesive force of the resin can be obtained; accordingly, the film can be inhibited from lacking in the strength-elongation and from becoming brittle. On the other hand, when the weight (mass) average molecular weight is 80, 000 or less, the melt viscosity can be lowered; accordingly, it is preferable from the viewpoint of manufacture and productivity improvement.

The lower limit value of the intrinsic viscosity (IV) of the polyester series resin used in the A layer is 0.5dl/g or more, preferably 0.6dl/g or more and more preferably 0.7dl/g or more. Furthermore, the upper limit value of the intrinsic viscosity (IV) is 1.5dl/g or less, preferably 1.2dl/g or less and more preferably 1.0dl/g or less. When the intrinsic viscosity (IV) is 0.5dl/g or more, the mechanical strength characteristics of the film can be inhibited from deteriorating. On the other hand, when the intrinsic viscosity (IV) is 1.5dl/g or less, the breakage or the like accompanying an increase in the drawing tension can be inhibited from occurring.

As the polyester series resins, for instance, "PETG copolyester6763" (trade name, produced by Eastman Chemical Co., Ltd.) and "SKYGREEN PETG" (trade name, produced by SK Chemicals Co., Ltd.) are commercialized.

In the invention, when, as a main component of a polyester series resin that constitutes an A layer, a polyester resin derived from a carboxylic acid residue and a diol residue and a copolymer polyester resin are used, the main component is contained, to a sum total of resins that constitute the A layer, at a ratio of 50 mass % or more, preferably 60 mass % or more and more preferably 70 mass % or more and 100 mass % or less, preferably 95 mass % or less and more preferably 90 mass % or less. When the content of the resin is 50 mass % or more, the peak temperature of the loss elastic modulus ($E_A''$) that is the characteristics of the resin and the characteristics of the storage elastic modulus ($E_A'$) can be maintained.

Furthermore, in the invention, as far as the conditions (a) and (b) are satisfied, other resins may be contained at a ratio of 50 mass % or less. As resins that can be preferably used as the other resins, polyethylene terephthalate synthesized from terephthalic acid and ethylene glycol and polybutylene terephthalate synthesized from terephthalic acid and 1,4-butanediol can be cited. The resins have high crystallinity; accordingly, the resins, when mixed, are mixed to a sum total of whole resins that constitute the A layer at a ratio of 30 mass % or less, preferably 20 mass % or less and preferably in the range of 5 mass % or more and 20 mass % or less. When the other resins are contained in the range, the conditions (a) and (b) can be satisfied, the crystallinity can be inhibited from becoming too high and the thermal shrinkage ratio of the film can be suppressed from becoming low. Furthermore, when the A layer is used for front and back layers, the solvent sealing property (seal strength) can be inhibited from becoming low due to the crystallinity.

(Polylactic Acid Series Polymer)

In the invention, a polylactic acid polymer that can be preferably used is a homopolymer of D-lactic acid or L-lactic acid or a copolymer thereof. Specifically, poly(D-lactic acid) of which structural unit is D-lactic acid, poly(L-lactic acid) of which structural unit is L-lactic acid, poly(DL-lactic acid) that is a copolymer of L-lactic acid and D-lactic acid or mixtures thereof as well are included.

A polylactic acid series polymer can be produced by means of a known method such as a polycondensation method, a ring-opening polymerization method or the like. For instance, in the polycondensation method, when D-lactic acid, L-lactic acid or a mixture thereof is directly dehydration-polycondensed, a polylactic acid polymer having an arbitrary composition can be obtained. Furthermore, in the ring-opening polymerization method, when lactide that is a cyclic dimer of lactic acid, as needs arise, in the presence of a polymerization modifier or the like, is subjected to a ring-opening reaction in the presence of a predetermined catalyst, a polylactic acid polymer having an arbitrary composition can be obtained. In the lactide, L-lactide that is a dimer of L-lactic acid, D-lactide that is a dimer of D-lactic acid and DL-lactide that is a dimer of D-lactic acid and L-lactic acid are included and when these are mixed as needs arise and polymerized, a polylactic acid polymer having an arbitrary composition and the crystallinity can be obtained.

A polylactic acid polymer of which composition ratio of D-lactic acid and L-lactic acid is 100:0 or 0:100 becomes a very highly crystalline resin and tends to be high in the melting point and excellent in the heat resistance and mechanical properties. However, in the case of the polylactic acid polymer being used as a heat-shrinkable film, when the crystallinity is very high, during the stretching, the crystallization due to the stretching orientation is forwarded to be difficult to control the heat shrinkage ratio, and, even when a non-crystalline film is obtained under the stretching condition, the crystallization is forwarded due to heat during the shrinkage, resulting in deteriorating the shrink finishing quality. On the other hand, in the case of the copolymer of the DL-lactic acid, it is known that, as a ratio of optical isomer increases, the crystallinity is lowered.

In this connection, in the invention, a polylactic acid polymer that is used in the A layer has a compositional ratio of D-lactic acid and L-lactic acid preferably in the range of 98:2 to 85:15 or 2:98 to 15:85, more preferably in the range of 97:3 to 87:13 or 3:97 to 13:87 and most preferably in the range of 95:5 to 90:10 or 5:95 to 10:90.

In the case of a polylactic acid polymer being used, when the compositional ratio of D-lactic acid and L-lactic acid is set in the above range, the orientation crystallization at the stretching can be appropriately controlled, and the crystallization at the shrinkage can be reduced. Accordingly, excellent shrink finishing quality can be obtained.

Furthermore, in a polylactic acid polymer, in order to control the D-body and L-body, at least two kinds of polylactic acids different in the compositional ratio of D-lactic acid and L-lactic acid may be mixed.

The polylactic acid polymer is contained to a sum total of resins that constitute the A layer at a ratio of 50 mass % or more, preferably 60 mass % or more and more preferably 70 mass % or more, and 100 mass % or less, preferably 95 mass % or less and more preferably 90 mass % or less. When the polylactic acid polymer is contained 50 mass % or more, the peak temperature of the loss elastic modulus ($E_A''$) that is the characteristics of the resin and the characteristics of the storage elastic modulus ($E'$) can be maintained.

The polylactic acid polymer used in the A layer desirably has a high molecular weight, for instance, by the weight (mass) average molecular weight, preferably 10,000 or more, more preferably in the range of 60,000 or more and 400,000 or less and particularly preferably in the range of 100,000 or more and 300,000 or less. When the weight (mass) average molecular weight of the polylactic acid polymer is 10, 000 or more, an obtained film preferably shows excellent mechanical properties.

As typical ones of the polylactic acid polymers, Lacty series (trade name, produced by Shimadzu Corporation), Lacea series (trade name, produced by Mitsui Chemicals Inc.), Nature Works Series (trade name, produced by Cargill-Dow LLC) or the like can be cited.

<B Layer>

In the invention, a resin that is preferably used as a resin that constitutes a B layer is a polystyrene series resin. The polystyrene series resin includes various kinds of polystyrene series resins. However, among these, a block copolymer of styrene series hydrocarbon and conjugate dien series hydrocarbon can be preferably used. The block copolymer described in the specification includes a pure block where a resin is pure for every block, a random block where copolymer components are mixed to form a block, a tapered block where a concentration of the copolymer component is tapered and the like. However, in order to satisfy the viscoelastic characteristics, a block portion is preferably made of a random block and a tapered block.

Examples of styrene series hydrocarbons in a block copolymer between styrene series hydrocarbon and conjugate dien series hydrocarbon include styrene, o-methylstyrene, p-methylstyrene, $\alpha$-methylstyrene and the like. The styrene series hydrocarbon block may include a homopolymer thereof, a copolymer thereof and/or a copolymerizable monomer other than the styrene series hydrocarbon in a block.

As the conjugate dien series hydrocarbon, for instance,butadiene, isoprene, 1,3-pentadiene and the like can be cited. The conjugate dien series hydrocarbon block may include a homopolymer thereof, a copolymer thereof and/or a copolymerizable monomer other than the conjugate dien series hydrocarbon in a block.

A copolymer of styrene series hydrocarbon and conjugate dien series hydrocarbon is contained, to a total mass of the B layer, 50 mass % or more, preferably 60 mass % or more and more preferably 70 mass % or more. When the copolymer is contained 50 mass % or more in a whole B layer, in the B layer, an advantage of a copolymer of styrene series hydrocarbon and conjugate dien series hydrocarbon, that is, the shrink finishing quality can be preferably sufficiently exerted.

One of block copolymers of styrene series hydrocarbon and conjugate dien series hydrocarbon, which are preferably used in the invention, is a styrene-butadiene series block copolymer (SBS) where styrene series hydrocarbon is styrene and conjugate dien series hydrocarbon is butadiene. In the SBS, a mass % ratio of styrene-butadiene is preferably substantially 95 to 60/5 to 40 and more preferably substantially 90 to 60/10 to 40. A measurement of the melt flow rate (MFR) of the SBS (measurement conditions: temperature 200˚C, load 49N) is 2g/10min or more, preferably 3g/10min or more and 15g/10min or less and preferably 10g/10min or less.

Examples of the styrene-butadiene series block copolymers include Asaflex series (trade name, produced by Asahi Chemical Industry), Clearene Series (trade name, produced by DENKI KAGAKU KOGYO KABUSHIKI KAISHA), K-Resin (trade name, produced by Shevron-Philips), Styrolux (trade name, produced by BASF) and Finaclear (trade name, produced by ATOFINA) can be cited.

Another block copolymer that is preferably used in the invention is a styrene-isoprene-butadiene block copolymer (SIBS). In the SIBS, a mass % ratio of styrene-isoprene-butadiene is preferably 60 to 90/10 to 40/5 to 30 and more preferably 60 to 80/10 to 25/5 to 20. A measurement value of the melt-flow rate (MFR) (measurement conditions: temperature 200˚C and load 49 N) of the SIBS is 2g/10min or more and preferably 3g/10min or more and 15g/10min or less and preferably 10g/10min or less. When the butadiene content and isoprene content are within the foregoing ranges, other than a crosslinking reaction of butadiene heated in an extruder or the like can be suppressed and thereby a gel-like matter can be inhibited from generating, from the viewpoint of the material costs as well, it is preferred.

As the styrene-isoprene-butadiene block copolymer, for instance, Asaflex I Series (trade name, produced by Asahi Kasei Chemicals Corp.) are commercialized.

The block copolymer between styrene series hydrocarbon and conjugate dien series hydrocarbon, which is used in the B layer, may be a mixture of at least two kinds. That is, even when individual block copolymers between styrene series hydrocarbon and conjugate dien series hydrocarbon cannot satisfy the predetermined viscoelastic characteristics of the invention, ones that can satisfy the predetermined viscoelastic characteristics of the invention after mixing can be mixed. Furthermore, a polystyrene series resin that constitutes the B layer, by mixing a resin that imparts the stiffness and a resin rich in a rubber component, may satisfy the expressions (II) and (III).

Here, the resin rich in a rubber component is the SBS described above or the like and has the peak of the loss elastic modulus (E") in the range of -80˚C or more and 0˚C or less and preferably in the range of -80˚C or more and -20˚C or less. When the resin rich in a rubber component is mixed, although the storage elastic moduli ($E_B$') at 50˚C and 90˚C may be outside of the invention, the storage elastic modulus ($E_B$') is preferred to be 1.0 x $10^8$Pa or more and a styrene content is 40 mass % or more and 80 mass % or less and preferably 50 mass % or more and 75 mass % or less.

On the other hand, the resin that imparts the stiffness is a resin that is mixed to impart the stiffness mainly to the B layer. For instance, a copolymer made of styrene series hydrocarbon, specifically, polystyrene, a copolymer of styrene series hydrocarbon and aliphatic unsaturated carboxylic acid ester, a block copolymer of styrene series hydrocarbon and conjugate dien series hydrocarbon or the like can be preferably employed.

The styrene series hydrocarbon in the copolymer of styrene series hydrocarbon and aliphatic unsaturated carboxylic acid ester indicates styrene, o-methylstyrene, p-methylstyrene, $\alpha$-methylstyrene or the like. Furthermore, as the aliphatic unsaturated carboxylic acid ester, methyl (meth)acrylate, butyl (meth)acrylate, 2-ethylhexyl (meth)acrylate, lauryl (meth)acrylate and stearyl (meth)acrylate can be used. Here, the (meth)acrylate indicates acrylate and/methacrylate. Among these, a copolymer of styrene and butyl (meth)acrylate is preferred.

The styrene-butyl (meth)acrylate copolymer, when butyl acrylate is copolymerized, can lower the glass transition temperature (that is, a peak temperature of the loss elastic modulus). A polymerization ratio of styrene/butyl acrylate copolymer, though appropriately adjusted depending on applications, in order to set the glass transition temperature in the range of 50˚C or more and 90˚C or less, is preferably set in the range of 70 mass % or more and 90 mass % or less in the styrene content. When the styrene content is less than 70 mass %, the glass transition temperature (the peak temperature of the loss elastic modulus) thereof becomes 50˚C or less, resulting in, in some cases, incapability of using as the heat-shrinkable film. On the other hand, when the styrene content exceeds 90 mass %, the glass transition temperature (the peak temperature of the loss elastic modulus) thereof becomes 90˚C or more, resulting in, in some cases, lowering the low-temperature shrinkability.

A molecular weight of the styrene/butyl (meth)acrylate copolymer is controlled so that a measurement value of the melt flow-rate (MFR) (measurement conditions: temperature 200˚C and load 49N) may be 2 or more and 15 or less.

A mixing amount of the styrene/butyl (meth)acrylate copolymer in the B layer, though varied depending on the composition ratio, can be appropriately controlled in accordance with the characteristics of the heat-shrinkable film, and is preferably controlled in the range of 30 mass % or more and 70 mass % or less and more preferably in the range of 40 mass % or more and 60 mass % or less. When the mixing amount exceeds 70 mass %, though the stiffness of the film can be largely improved, conversely, in some cases, the rupture-resistance is deteriorated. Furthermore, when the mixing amount is less than 20 mass %, an advantage of imparting the stiffness to the film becomes less.

Furthermore, in order to control the shrinkage characteristics, it is preferred that the peak temperature of the loss elastic modulus of the styrene/butyl (meth)acrylate copolymer is 40˚C or more and a clear peak temperature of the loss elastic modulus is not present at 40˚C or less. When the peak temperature of the loss elastic modulus of the styrene/ butyl (meth)acrylate copolymer is not present apparently up to 40˚C, since the storage elastic modulus characteristics substantially same as that of polystyrene are shown, the stiffness can be imparted to the film.

Furthermore, in order to impart the stiffness to the film, for instance, polystyrene may be added to the B layer. The polystyrene preferably has a molecular weight in the range of 100,000 to 500,000 by weight average molecular weight ($M_w$). The polystyrene has a very high glass transition temperature (the peak temperature of the loss elastic modulus) such as substantially 100˚C; accordingly, it is mixed by 20 mass % or less, preferably 15 mass % or less and more preferably 10 mass % or less.

n the invention, when the block copolymer of styrene series hydrocarbon and conjugate dien series hydrocarbon is used as a main component that constitutes the B layer, a method of controlling the expressions (II) and (III) will be described below.

The block copolymer of styrene series hydrocarbon and conjugate dien series hydrocarbon, which is preferably used in the invention, is a so-called styrene-butadiene block copolymer (SBS) where the styrene series hydrocarbon is styrene and the conjugate dien series hydrocarbon is butadiene. As to the viscoelastic characteristics of the styrene-butadiene block copolymer, when it is a pure block, peaks of the loss elastic modulus (E") due to butadiene block and styrene block are present at two points in the neighborhood of -90˚C and 110˚C.

Furthermore, in a random block where a butadiene component and a styrene component, respectively, are introduced in the styrene block and butadiene block, the respective peaks of the loss elastic modulus shift toward a higher temperature side for a peak on a lower temperature side and toward a lower temperature side for a peak on a higher temperature side. Still furthermore, depending on molecular weights of the respective blocks and 1,4 bond and 1, 2 bond in a polymerization mode of butadiene as well, rates at which the peak temperature and storage elastic modulus are deteriorated are varied. Accordingly, in the invention, when a copolymerization process of blocks is controlled to control positions of two peaks and degrees of deterioration of the storage elastic moduli in the peaks, a polymer having predetermined viscoelastic characteristics can be polymerized.

Furthermore, a block copolymer of styrene series hydrocarbon and conjugate dien series hydrocarbon, which constitutes the B layer in the invention, may preferably contain isoprene other than butadiene. As a block copolymer of styrene series hydrocarbon and conjugate dien series hydrocarbon, which contains isoprene, a styrene-isoprene-butadiene copolymer (SIBS) can be preferably used. Similarly to a block copolymer of styrene series hydrocarbon and conjugate dien series hydrocarbon, the SIBS as well, when the block structure is controlled at the polymerization, can obtain various viscoelastic characteristics (hereinafter, SBS and SIBS are summarized as "SBS or the like").

In order to make the storage elastic modulus at 50˚C ($E_B'$(50)) 1.5 x $10^8$Pa or more and preferably 1.5 x $10^8$Pa or more and 2.0 x $10^9$Pa or less, a peak of the loss elastic modulus (E") of a resin constituting the B layer is allowed to exist in the range of -80˚C or more and 0˚C or less, preferably in the range of -80˚C or more and -20˚C or less. When the peak temperature of the loss elastic modulus is controlled within the range, the storage elastic modulus at a temperature higher than that can be controlled. For instance, in the SBS or the like, the storage elastic modulus at 50˚C ($E_B'$ (50) ) can be controlled owing to difference of molecular weights of the butadiene block and styrene block. On the other hand, in order to make the storage elastic modulus at 90˚C ($E_B'$ (90)) 5.0 x $10^7$Pa or more, when the styrene block of the SBS or the like is rendered a state close to a pure block, it can be controlled. Accordingly, when the block structure of a butadiene portion of the SBS or the like used in the B layer of the invention is rendered a random block and a block structure of the styrene portion is rendered a state close to a pure block, the storage elastic moduli ($E_B'$) at 50˚C and 90˚C can be controlled in the predetermined range.

Next, an example of a polymerization method that satisfies the expressions (II) and (III) in the B layer will be shown below.

First, after styrene or butadiene are partially charged and a polymerization is brought to completion, a mixture of styrene monomer and butadiene monomer is charged and the polymerization reaction is kept on. At this time, when mixing ratios of styrene monomer and butadiene monomer and addition amounts thereof are controlled, the peak temperature of the storage elastic modulus can be controlled. For instance, when styrene is singularly polymerized and, after completion of the polymerization, a mixture obtained by mixing styrene monomer and butadiene monomer at a predetermined ratio is charged to keep the polymerization going on, a block having a site of random polymerization of butadiene and styrene can be formed.

Next, when styrene monomer is once more added to polymerize, a styrene-butadiene block copolymer having a structure of a styrene portion-a styrene-butadiene random portion-a styrene portion can be obtained. When a mixing amount and a mixing ratio of the random portion is controlled, a polymer having the viscoelastic characteristics can be obtained.

The B layer in the invention can contain resins that are used in the A layer and the adhesive layer. When the resins that are used in the A layer and/or adhesive layer can be contained in the 8 layer, recycle film generated from trimming loss or the like such as heels of film can be reused and the producing cost can be reduced. When the B layer contains a resin that constitutes the A layer, to 100 parts by mass of resins that constitute the B layer, the resin that constitutes the A layer is added 1 parts by mass or more and 50 parts by mass or less, preferably 40 parts by mass or less and more preferably 30 parts by mass or less. When the resin that constitutes the A layer is contained 50 parts by mass or less in the B layer, without deteriorating the mechanical strength of the film, the transparency at the recycle and addition can be maintained. Similarly, when the B layer contains a resin that constitutes the adhesive layer, to 100 parts by mass of resins that constitute the B layer, a resin that constitutes the adhesive layer is added 1 parts by mass or more and 30 parts by mass or less, preferably 20 parts by mass or less and more preferably 10 parts by mass or less. When the resin that constitutes the adhesive layer is mixed in the B layer, the adhesiveness between the adhesive layer and the B layer can be improved.


<Adhesive Layer>

In the film of the present invention, an adhesive layer may be formed between the A layer and B layer. A resin that constitutes the adhesive layer is not particularly restricted. However, a mixed resin of a polyester resin and a polystyrene series resin that are used in the invention can be preferably used. When the mixed resin is used in the adhesive layer, the polyester resin on front layer and back layer sides and the polystyrene series resin on the intermediate layer side, respectively, can be adhered to the polyester component and the polystyrene series component of the mixed resin, and thereby the adhesive strength between layers can be expected improved.

Furthermore, as the resin that constitutes the adhesive layer, in the range where the transparency after addition as a reclamation material is considered, a resin other than the mixed resin may be used. As such a resin, for instance, a copolymer of a vinyl aromatic compound and conjugate dien series hydrocarbon or a hydrogenated derivative thereof can be cited. Here, as the vinyl aromatic compound, styrene series hydrocarbons can be preferably used, for instance, styrene homologs such as α-methylstyrene and the like as well can be preferably used. On the other hand, as the conjugate dien series hydrocarbon, for instance, 1,3-butadiene, isoprene, 1,3-pentadiene or the like can be cited, and, these can be used singularly or in a combination of at least two kinds. Furthermore, as a third component, a component other than the vinyl aromatic compound and conjugate dien series hydrocarbon may be slightly added. Still furthermore, when double bonds mainly made of vinyl bonds of the conjugate dien series portion are contained much, the familiarity with the polyester resin of front and back layers can be improved and thereby the interlayer adhesive strength can be preferably improved.

When the copolymer of styrene series hydrocarbon and conjugate dien series hydrocarbon or the hydrogenated derivative thereof is used as an adhesive layer, a content of the styrene series hydrocarbon is 5 mass % or more and preferably 10 mass % or more and 40 mass % or less and preferably 35 mass % or less. In the case of the content of the styrene series hydrocarbon being 5 mass % or more, the compatibility when the film is recycled and added to the front and back layers and/or intermediate layer (usually added to the intermediate layer) is excellent; accordingly, a film of which transparency is maintained can be obtained. On the other hand, when the content of the styrene series hydrocarbon is 40 mass % or less, the adhesive layer is full of the flexibility, and, for instance, when the stress or impact is applied to an entire film, works as a buffering material to the stress generated between the front and back layers and the intermediate layer to suppress the interlayer peeling.

Furthermore, the glass transition temperature (Tg) of the copolymer of the vinyl aromatic compound and conjugate dien series hydrocarbon or a hydrogenated derivative thereof is preferably 20˚C or less, more preferably 10˚C or less and still more preferably 0˚C or less. When the Tg is 20˚C or less, in the case of the stress being applied to the laminated film, since a flexible adhesive layer can work as a buffering material, the interlayer peeling can be practically preferably inhibited from occurring.

The Tg in the invention is a value obtained as follows. That is, by use of a viscoelasticity spectrometer DVA-200 (trade name, produced by IT Instrument Control Co. , Ltd.), a measurement is carried under the conditions of oscillation frequency of 10 Hz, strain of 0.1% and a temperature-up speed of 3˚C/min, a peak value of the loss elastic modulus (E") is obtained from obtained data, and a temperature at that time is taken as Tg. When there is a plurality of peaks of the loss elastic modulus (E"), a temperature of a peak value where the loss elastic modulus (E") shows the maximum value is taken as Tg.

The copolymer of a vinyl aromatic compound and conjugate dien series hydrocarbon or a hydrogenated derivative thereof is commercialized as, for instance, a styrene-butadiene block copolymer elastomer (trade name: Toughprene,produced by Asahi Chemical Industry Co.,Ltd.), a hydrogenated derivative of a styrene-butadiene block copolymer (trade name: Toughtec H, produced by Asahi Chemical Industry Co., Ltd. and trade name: Kraton G, produced by Shell Japan Co., Ltd.), a hydrogenated derivative of a styrene-butadiene random copolymer (trade name: Dynaron, produced by JSR Co. , Ltd.), a hydrogenated derivative of a styrene-isoprene block copolymer (trade name: Septon, produced by Kuraray Co., Ltd.), a styrene-vinyl isoprene block copolymer elastomer (trade name: Hybrar, produced by Kuraray Co., Ltd.) and the like.

Furthermore, the copolymer of a vinyl aromatic compound and conjugate dien series hydrocarbon or a hydrogenated derivative thereof, when a polar group is introduced therein, can further improve the interlayer adhesiveness with the front and back layers made of a polyester series resin. As the polar group that can be introduced, an acid anhydride group, a carboxylic acid group, a carboxylic acid ester group, a carboxylic acid halide group, a carboxylic acid amide group, a carboxylate group, a sulfonic acid group, a sulfonic acid ester group, a sulfonic acid halide group, a sulfonic acid amide group, a sulfonate group, an epoxy group, an amino group, an imide group, an oxazoline group, a hydroxyl group and the like can be cited. As a copolymer of a vinyl aromatic compound and conjugate dien series hydrocarbon or a hydrogenated derivative thereof, in which a polar group is introduced, maleic acid anhydride-modified SEBS, maleic acid anhydride-modified SEPS, epoxy-modified SEBS, epoxy-modified SEPS and the like can be typically cited. Specifically, Toughtec M (trade name, produced by Asahi Chemical Industry Co., Ltd.), Epofriend (trade name, produced by Daicel Chemical Industries, Ltd.) and the like are commercialized. The copolymers can be used singularly or in a combination of at least two kinds.

In the invention, other than the foregoing components, within a range that does not remarkably disturb advantages of the invention, in order to improve and control the moldability, the productivity and various physical properties of the heat-shrinkable film, based on the contents of the resins that constitute the A layer, B layer or adhesive layer, a plasticizer and/or stickiness-imparting resin may be added in the range of 1 parts by mass or more and 10 parts by mass or less and preferably in the range of 2 parts by mass or more and 8 parts by mass or less. When an amount of the plasticizer and/or stickiness-imparting resin is the upper limit or less, the natural shrinkage due to a decrease in the melt viscosity and a decrease in the anti-thermal adhesiveness can be suppressed from occurring. Other than the plasticizer and stickiness-imparting resin, according to various objects, various kinds of additives such as a UV-absorber, a light stabilizer, an antioxidant, a recycle resin generated from the trimming loss such as heels of the film and, and inorganic particles such as silica, talc, kaolin, calcium carbonate and the like, pigments such as titanium oxide, carbon black, a flame retardant, a weather-resistant stabilizer, a heat-resistant stabilizer, a coloring agent, an antistatic agent, a melt-viscosity improver, a crosslinking agent, a lubricant, a nucleation agent, a plasticizer, an anti-aging agent and the like can be appropriately added according to the respective applications.

(Layer Configuration of Film)

The film of the present invention, when at least two kinds of the A layer and B layer that have the foregoing viscoelastic characteristics are laminated to form, can satisfy excellent characteristics. The film of the invention can sufficiently satisfy the characteristics when the A layer and B layer are laminated. However, in particular, it is particularly preferred that the B layer becomes an intermediate layer made of at least one layer and the A layer becomes front and back layers.

The simplest configuration is a film that has a two-kind three-layer configuration such as A layer/B layer/A layer. However, without restricting thereto, within a range that does not disturb the characteristics of the invention, a separate layer or the like may be laminated. For instance, a configuration of three-kind and five-layer such as A layer/C layer/B layer/C layer/A layer can be formed, furthermore, a configuration such as A layer/adhesive layer/B layer/adhesive layer/A layer can be formed.

As to lamination ratios of films of the invention, a ratio of the A layer to a total thickness of the laminated film is preferably 75% or less, more preferably 50% or less and still more preferably 40% or less. Furthermore, a thickness ratio of the A layer is preferably 15% or more and more preferably 20% or more. When the thickness ratio of the A layer is 15% or more, foregoing advantage of shrinkage characteristics (natural shrinkage/low-temperature shrinkage) can be exerted and, when it is 75% or less, since a resin that constitutes the A layer does not largely affect on the shrinkage characteristics of the film, excellent shrink finishing quality can be obtained.

On the other hand, the B layer, mainly imparting the shrink finishing quality, is desirably contained, in the film of the invention, at a ratio of 25% or more, preferably 40% or more and more preferably 50% or more and 85% or less and preferably 80% or less. The B layer determines the shrink finishing quality of the film of the invention and, mainly, 25% or more thereof is necessary. On the other hand, when the ratio of the B layer is 85% or less, without decreasing an advantage of the A layer, excellent shrink finishing quality can be obtained.

Furthermore, when there is an adhesive layer, in order to make a function of the adhesive layer exert, a thickness thereof is $0.5\mu m$ or more, preferably 0.75pm or more and more preferably $1\mu m$ or more and $6\mu m$ or less and preferably $5\mu m$ or less. When the thickness of the adhesive layer is within the above-mentioned range, the interlayer peeling can be inhibited from occurring and, at the time of the addition of a reclamation material, the transparency of the film can be maintained.

<Physical and Mechanical Characteristics>

The film of the present invention, from the viewpoint of the stiffness, preferably has the tensile elastic modulus of 1300MPa or more in a direction (MD) perpendicular to the main shrinking direction of the film and more preferably that of 1400MPa ormore. Furthermore, the upper limit value of the tensile elastic modulus of the heat-shrinkable film that is usually used is substantially 3000MPa, preferably substantially 2900MPa and more preferably substantially 2800MPa. When the tensile elastic modulus in a direction perpendicular to the main shrinking direction of the film is 1300MPa or more, the stiffness of the film as a whole can be heightened. In particular, it is preferable in that, even in the case of a film thickness being made thinner, when a bag-formed film is covered on a vessel such as a PET bottle or the like by use of a labeling machine or the like, problems in that a film is covered obliquely or folded to deteriorate the yield are occurred with difficulty. The tensile elastic modulus can be measured in accordance with JIS K7127 at a condition of 23˚C.

The tensile elastic modulus in a main shrinking direction (TD) of the film, as far as a nerve of a film is obtained, is not particularly restricted. However, the tensile elastic modulus in the main shrinking direction (TD) is 1500MPa or more, preferably 2000MPa or more and more preferably 2500MPa or more, and the upper limit thereof is 6000MPa or less, preferably 4500MPa or less and more preferably 3500MPa or less. When the tensile elastic modulus in the main shrinking direction of the film is set in the foregoing range, in both directions, the nerve of the film can be preferably heightened.

In the film of the invention, of MD and TD of the respective films, the tensile elastic moduli are measured in accordance with the JIS K7127, and, with an average value thereof, the nerve of the film can be evaluated. An average value thereof is preferably 1500MPa or more and more preferably 1700MPa or more.

The natural shrinkage rate of the film of the invention is desirably as small as possible. For instance, the natural shrinkage rate at 30˚C after 30 days storage is 1.5% or less and preferably 1.0% or less. When the natural shrinkage rate under the foregoing conditions is 1.5%, even when a prepared film is stored for a long time, it can be stably mounted to containers and the like, that is, there is practically no problem.

The transparency of the film of the invention is, when a film having, for instance, a thickness of $50\mu m$ is measured in accordance with JIS K7105, preferably 10% or less as a haze, preferably 7% or less and more preferably 5% or less. When the haze is 10% or less, the transparency of the film can be obtained and thereby a display effect can be obtained.

Furthermore, in the film of the invention, even when to 100 parts by mass of the A layer or B layer, preferably the B layer, 45 parts by mass or less, preferably 40 parts by mass or less and more preferably 35 parts by mass or less is recycled and added (that is, when the B layer contains the polyester series resin in the range of 1 to 30 mass % and the adhesive resin in the range of 1 to 30 mass %), the haze of a film having a thickness of $50\mu m$, which is measured in accordance with JIS K7105, is 10% or less, preferably 7 % or less and more preferably 5% or less. When the haze after addition as a reclamation material is 10% or less, excellent transparency can be maintained in a recycled film.

The rupture-resistance of the film of the invention is evaluated based on the tensile rupture elongation. In a tensile rupture test under an environment of 0˚C, in particular, in the label application, the elongation rate in a drawing (flow) direction (MD) of the film is 100% or more, preferably 200% or more and more preferably 300% or more. When the tensile rupture elongation under a 0˚C environment is 100% or more, inconveniences such as breakage or the like of the film in the step of printing and bag-making can be preferably inhibited from occurring. Furthermore, even when, as a step of printing and bag-making is sped up, the tension applied on the film is increased, the tensile rupture elongation of 200% or more preferably inhibits the rupture from occurring.

The sealing strength of the film of the invention, when measured according to a measurement method described in an example described below (a method where, under an environment of 23˚C and 50% RH, a type T peeling method is applied in a TD direction at a test speed of 200mm/min to peel), is 2N/15mm width or more, preferably 3N/15mm width or more and more preferably 5N/15mm width or more. Furthermore, the upper limit of the interlayer peeling strength is not particularly restricted, from the view point of solvent resistance of a film surface, it is preferably substantially 15N/15mm width.

Since the film of the invention has the sealing strength of at least 2N/15mm width, troubles such as peeling in a sealing portion during use or the like is not caused. Furthermore, the interlayer peel strength after the film of the invention is heat shrunk is excellent as well and maintains the strength same as that of the interlayer peel strength before the heat shrinkage.

<Manufacturing Method of Film>

The film of the present invention can be produced by use of one of known methods. A film shape may be any one of a planar shape or a tubular shape. However, from the viewpoint of the productivity (several sets can.be obtained as products in a width direction of an original film) and capability of printing on an inner surface, a planar shape is preferred. As a manufacturing method of the planar film, for instance, a method where a plurality of extruders is used to melt resins, followed by co-extruding from a T-die, further followed by cooling and solidifying with a chilled roll, still further followed by roll stretching in a longitudinal direction, followed by tenter stretching in a transverse direction, further followed by annealing, still further followed by cooling, (followed by applying the corona treatment when printing is applied) and followed by winding with a winder to obtain a film can be exemplified. Furthermore, a method where a film produced by means of a tubular method is cut and opened into a planar shape can be applied as well. Still furthermore, after a resin that constitutes the A layer and a resin that constitutes the B layer are separately formed into sheets, the sheets may be laminated by means of a pressing method or a roll nipping method.

A melt-extruded resin, after cooling with a cooling roll, air, water or the like, is reheated by means of an appropriate method such as hot air, hot water, infrared ray or the like, followed by mono- or biaxially stretching by means of a roll method, a tenter method, a tubular method or the like.

In the producing method of the film of the invention, the stretching conditions in a main shrinking direction of film are important, that is, a temperature thereof is controlled in the range of 85˚C or more and 120˚C or less and preferably in the range of 90˚C or more and 110˚C or less, and a stretching multiplication factor is controlled in the range of three times or more and six times or less. When a film is stretched in the temperature range, since the shrinkage characteristics are prevailed by a polystyrene series resin that constitutes the B layer, and a resin that constitutes the A layer, being less oriented in a main shrinking direction of film than a general polyester series heat-shrinkable film, can be suppressed in the shrinkage in a longitudinal direction (MD), and, being low in the orientation thereof, can be expected as well to improve the rupture-resistance mainly in a direction perpendicular to the main shrinking direction of film in film for the heat-shrinkable labels.

Even when an application where substantially unidirectional shrinkage characteristics are necessary like labels for PET bottles, the film can be effectively stretched in a direction perpendicular thereto in a range that does not disturb the shrinkage characteristics. The stretching temperature, though depending on constituent resins, is typically in the range of 80˚C or more and 100˚C or less. Furthermore, the larger the stretching multiplication factor is, the more the rupture-resistance is improved. However, the shrinkage rate becomes larger therewith and excellent shrink finishing quality become difficult to obtain; accordingly, the stretching multiplication factor is very preferably in the range of 1.03 times or more and 1.5 times or less.

[Molded Product, Heat-shrinkable Label and Container]

The films of the invention, being excellent in the low-temperature shrinkability, stiffness, rupture-resistance and shrink finishing quality of film, is not particularly restricted in the applications. However, when, as needs arise, other functional layers such as a printing layer and a deposition layer are formed, the film can be used as various molded products such as bottles (blow bottles), trays, lunch boxes, daily dish containers, daily product containers and the like.

In particular, when the film of the invention is used as heat-shrinkable labels for food containers (such as PET bottles for refreshing drinks and foods, glass bottles, preferably PET bottles), even when the food containers have complicated shapes (such as cylinders narrowed at a center thereof, cornered quadrangular prisms, pentagonal prisms, hexagonal prisms or the like), the film can be adhered to the shapes, and thereby containers decorated with a beautiful label without wrinkles and pockmarks can be obtained. The molded products and containers of the invention can be prepared by use of one of ordinary molding methods.

The films of the invention, being excellent in the low-temperature shrinkability and shrink finishing quality, can be preferably used not only as raw materials for heat-shrinkable labels of plastic molded products that are deformed when heated to high temperatures but also as materials largely different from the heat-shrinkable laminate film of the invention in the thermal expansion coefficient, water-absorbing property and the like such as raw materials for heat-shrinkable labels of packaging bodies (containers) that use, as a constituent material, at least one kind selected frommetals, porcelains, glasses, papers, polyolefinic resins such as polyethylene, polypropylene, polybuthene and the like, polyester resins such as polymethacrylic ester series resins, polycarbonate series resins, polyethylene terephthalate, polybutylene terephthalate or the like and polyamide resins.

As a material that can constitute a plastic packaging material to which the film of the invention can be applied, other than foregoing resins, polystyrene, shock-resistant rubber-modified polystyrene (HIPS), styrene/butyl acrylate copolymer, styrene/acrylonitrile copolymer, styrene/maleic anhydride copolymer, acrylonitrile/butadiene/styrene copolymer (ABS), methacrylic acid ester/butadiene/styrene copolymer (MBS), polyvinyl chloride series resin, phenol resin, urea resin, melamine resin, epoxy resin, unsaturated polyester resin, silicone resin and the like can be cited. The plastic packaging bodies may be a mixture of at least two kinds of resins or a laminated body thereof.

Examples

Hereinafter, examples will be shown. However, the present invention is not restricted thereto. Measurement values shown in examples are obtained and evaluations are carried out as follows. Here, a winding (flow) direction of a film is described as MD and a direction perpendicular to that is described as TD.

(1) Thermal Shrinkage Rate

Films were cut into a size of MD 100mm and TD 100mm, dipped for 10 sec in a hot water bath at 80˚C in a main shrinking direction and at 70˚C, 75˚C and 80˚C in a direction perpendicular to the main shrinking direction, followed by measuring the shrinkage rate. The thermal shrinkage rate expresses a ratio of a shrinkage amount to an original length before shrinkage as a percent value.

(2) Natural Shrinkage Rate

A film, after preparation, was left at 23˚C for 5 hours, followed by cutting into a size of MD 50mm and TD 100mm, further followed by leaving in a thermostat bath having an atmosphere set at 30˚C for 30 days, followed by measuring the shrinkage rate of TD.

(3) Tensile Rupture Elongation

From a film, a test piece of which width in a MD direction is 15mm and a length is 50mm was cut, set to a tensile tester with a thermostat bath with a distance between chucks set at 40mm and drawn at a test speed of 100mm/min at 0˚C. The tensile rupture elongation was obtained from an equation below.

$$\text{Tensile rupture elongation (\%)} = ((\text{a length between chucks at rupture} - 40 \text{ (mm)})/40 \text{ (mm)}) \times 100$$

(4) Transparency (Total Haze)

A haze of a film having a thickness of $50\mu m$ was measured according to JIS K7105.

(5) Tensile Elastic Modulus

Of the MD direction, a film test piece having a width of 3. 0mmwas subjected to a tensile test under an environment temperature of 23.0˚C, with a distance between chucks set at 80.0mm and at a drawing speed of 5.0mm/min. Of the TD direction, a film test piece having a width of 5.0mm was subjected to a tensile test under an environment temperature of 23.0˚C, with a distance between chucks set at 300.0mm and at a drawing speed of 5.0mm/min. With a first straight line portion of a tensile stress-strain curve, the tensile rupture modulus was calculated according to an equation below.

$$E = \sigma / \varepsilon$$

E: tensile rupture modulus, and
σ: difference of stresses per unit area (average sectional area of a sample before tensile test) between two points on a straight line

(6) Viscoelasticity Measurement

By use of a viscoelasticity spectrometer DVA-200 (trade name, produced by IT Instrument Control Co., Ltd.), a measurement was carried under the conditions of oscillation frequency: 10Hz, strain: 0.1%, rate of temperature increase: 3˚C/min and measurement temperature range: from -120˚C to 150˚C. A peak temperature of the loss elastic modulus (E") was obtained as a temperature where a gradient of a temperature-dependency curve of the loss elastic modulus becomes 0 (first derivation is 0) . A film to be measured was prepared from a constituent resin into a thickness of substantially 0.2 to 1.0mm, followed by measuring a substantially no-oriented direction. That is, after a constituent resin was extruded by use of an extruder, a transverse direction was measured; alternatively, the orientation was alleviated by use of a hot-press, followed by measuring. Irrespective of stretched one or non-stretched one, a film of a constituent resin, after forming into a sheet by use of a hot press, can be measured as well.

(7) Shrink finishing quality

A film thereon a lattice pattern having a 10mm separation is printed was cut into a size of MD 100mm x TD 298mm and a cylinder was formed therefrom with both ends of TD superposed and adhered with a solvent or the like. The cylindrical film was mounted to a pet bottle having a capacity of 500ml and passed through a shrink tunnel heated by steam and having a length of 3.2m (3 zones) without rotating within substantially 4 seconds. Atmospheric temperatures in the respective zones inside of the tunnel were controlled in the range of 80˚C to 90˚C by controlling an amount of steam with a flow control valve.
Films were visually evaluated according to criteria below.

⊚: Sufficient shrinkage without wrinkles, spots and distortion of the lattice pattern and excellent in the adhesiveness
○: Sufficient shrinkage with a slight wrinkle, spot and distortion of the lattice pattern or with a slightly conspicuous shrinkage rate in a longitudinal direction and with no practical problem
×: Insufficient in the transverse direction shrinkage or conspicuous in the longitudinal direction shrinkage and practically problematic

(8) Sealing Strength

At positions of 10 mm from both ends in a TD direction of a film, the film was adhered with a tetrahydrofuran (THF) solvent or a mixed solvent of ethyl acetate and isopropyl alcohol and thereby a cylindrical label was produced. A sealed portion was cut with a width of 15mm in a circumferential direction (TD), followed by performing a T type peel strength test by use of a tensile tester with a thermostat bath (trade name: 201X, produced by INTESCO Co., Ltd.) under the condition of test speed of 200mm/min in a TD direction and evaluating.

(Example 1)

As shown in Table 1, as an intermediate layer, a polystyrene series resin: SBS-1 (styrene-butadiene = 76/24 mass %, the storage elastic modulus at 0˚C E' = 7 x 10$^8$Pa, peak temperatures of the loss elastic modulus E" = -75˚C and 103˚C, hereinafter, abbreviated as "SBS-1") was used, and, as front and back layers, a polyester series resin: PET-1 (a copolymer polyester with a dicarboxylic acid residue made of 100% of terephthalic acid and a glycol residue made of 68mole % of ethylene glycol and 32mole % of 1,4-cyclohexane dimethanol:trade name copolyester6763, produced by Eastman Chemicals Co., Ltd., hereinafter, abbreviated as "PET-1") was used. The resins were respectively melted by use of separate extruders with extrusion amounts set at intermediate layer: front and back layers = 3:2 and temperatures set in the range of 200 to 220°C for the intermediate layer and in the range of 220 to 240°C for the front and back layers, merged by a ferrule set at 230°C, extruded in two-kind three-layer (extrusion amount ratio=1:3:1), followed by cooling with a cast roll, and thereby an non-stretched film was obtained. The non-stretched film was stretched at 80°C in a flow direction (MD) to 1.3 times, followed by stretching at 93°C in a direction perpendicular thereto (TD) to 5.0 times, and thereby a film having a thickness of substantially 50μm (lamination ratio: 1/4/1) was prepared. Results of evaluations of obtained films are shown in Table 2.

(Example 2)

As shown in Table 1, as an intermediate layer, a polystyrene series resin: SBS-2 (styrene-butadiene=77/23 mass %, the storage elastic modulus at 0°C E' = 1.5 x $10^9$Pa, peak temperatures of the loss elastic modulus E" = -35°C and 90°C, hereinafter, abbreviated as "SBS-2") was used, and, as front and back layers, a polyester series resin: PET-2 (a polylactic resin: trade name NW4060, produced by Dow Cargill Polymer Co., Ltd., hereinafter, abbreviated as "PET-2") was used. The resins were respectively melted by use of separate extruders with extrusion amounts set at intermediate layer: front and back layers = 3:2 and temperatures set in the range of 200 to 220°C for the intermediate layer and in the range of 220 to 240°C for the front and back layers, merged by a ferrule set at 230°C, extruded in two-kind three-layer (extrusion amount ratio = 1:3:1), followed by cooling with a cast roll, and thereby an non-stretched film was obtained. The non-stretched film was stretched at 78°C in a flow direction (MD) to 1.3 times, followed by stretching in a direction perpendicular thereto (TD) at 88°C to 5.0 times, and thereby a film having a thickness of substantially 50μm (lamination ratio: 1/4/1) was prepared. Results of evaluations of obtained films are shown in Table 2.

(Example 3)

As shown in Table 1, as an intermediate layer, a mixed resin of 50 mass % of a polystyrene series resin: SBS-3 (styrene-butadiene = 90/10 mass %, the storage elastic modulus at 0°C E' = 3.1 x $10^9$Pa, the peak temperature of the loss elasticmodulus E" = 53°C, hereinafter, abbreviated as "SBS-3") and 50 mass % of a polystyrene series resin: SBS-4 (styrene-butadiene/isoprene = 71/14/15 mass %, the storage elastic modulus at 0°C E' = 4.1 x $10^8$Pa, the peak temperatures of the loss elastic modulus E" = -32°C and 102°C, hereinafter, abbreviated as "SBS-4") was used, and, as front and back layers, a polyester series resin: PET-1 was used. The resins were respectively melted by use of separate extruders with extrusion amounts set at intermediate layer: front and back layers = 3:1 and temperatures set in the range of 210 to 230°C for the intermediate layer and in the range of 220 to 240°C for the front and back layers, merged by a ferrule set at 230°C, extruded in two-kind three-layer (extrusion amount ratio = 1:6:1), followed by cooling with a cast roll, and thereby an non-stretched film was obtained. The non-stretched film was stretched at 80°C in a flow direction (MD) to 1.3 times, followed by stretching at 94°C in a direction perpendicular thereto (TD) to 5.05 times, and thereby a film having a thickness of substantially 50μm (lamination ratio: 1/7/1) was prepared. Results of evaluations of obtained films are shown in Table 2.

(Example 4)

As shown in Table 1, as an intermediate layer, a polyester series resin: PET-1 was used, and, as front and back layers, a polystyrene series resin: SBS-5 (styrene-butadiene = 84/16 mass %, the storage elastic modulus at 0°C E' = 1.7 x $10^9$Pa, the peak temperatures of the loss elastic modulus E" = -45°C and 85°C, hereinafter, abbreviated as "SBS-5") was used. The resins were respectively melted by use of separate extruders with extrusion amounts set at intermediate layer: front and back layers = 2:1 and temperatures set in the range of 220 to 240°C for the intermediate layer and in the range of 200 to 220°C for the front and back layers, merged by a ferrule set at 230°C, extruded in two-kind three-layer (extrusion amount ratio = 1:4:1), followed by cooling with a cast roll, and thereby an non-stretched film was obtained. The non-stretched filmwas stretched at 80°C in a flow direction (MD) to 1.05 times, followed by stretching at 90°C in a direction perpendicular thereto (TD) to 4.5 times, and thereby a film having a thickness of substantially 50μm (lamination ratio: 1/3/1) was prepared. Results of evaluations of obtained films are shown in Table 2.

(Example 5)

As shown in Table 1, as an intermediate layer, a mixed resin of 50 mass % of a polystyrene series resin: SBS-3 and 50 mass % of a polystyrene series resin: SBS-4 was used, as front and back layers, a polyester series resin:

PET-1 was used, and, as an adhesive layer, a hydrogenated styrenic thermoplastic elastomer resin: SEBS-1 (styrene/ethylene and butylene = 30/70 mass %, the peak temperature of the loss elastic modulus = -49˚C, Tuftec (trade name, produced by Asahi Kasei Chemicals Co., Ltd.), hereinafter, abbreviated as "SEBS-1") was used. The resins were respectively melted by use of separate extruders with extrusion amounts set at a ratio of (intermediate layer) : (adhesive layer): (front and back layers) = 3:1:2 and temperatures set in the range of 210 to 230˚C for the intermediate layer, in the range of 220 to 240˚C for the front and back layers and in the range of 210 to 230˚C for the adhesive layer, merged by a ferrule set at 230˚C, extruded in three-kind five-layer (extrusion amount ratio = 2:1:6:1:2), followed by cooling with a cast roll, and thereby an non-stretched film was obtained. The non-stretched film was stretched at 82˚C in a flow direction (MD) to 1.3 times, followed by stretching at 93˚C in a direction perpendicular thereto (TD) to 5.0 times, and thereby a film having a thickness of substantially 50μm (lamination ratio: 2/1/7/1/2) was prepared. Results of evaluations of obtained films are shown in Table 2.

(Example 6)

As shown in Table 1, as an intermediate layer, a mixed resin of 55 mass % of a polystyrene series resin: SBS-3 and 45 mass % of a polystyrene series resin: SBS-7 (styrene-butadiene = 70/30 mass %, the storage elastic modulus at 0˚C E' = 2.9 x 10$^8$Pa, the peak temperatures of the loss elastic modulus E" = -44˚C and 100˚C, hereinafter, abbreviated as "SBS-7") was used, and, as front and back layers, 80 mass % of a polyester series resin: PET-1 and 20 mass % of a polyester resin PET-3 (with a dicarboxylic acid residue made of 100mole % of terephthalic acid and a glycol component made of 100mole % of 1,4-butane diol: trade name DURANEX 2002, produced by Polyplastics Co. , Ltd. , hereinafter, abbreviated as "PET-3") were used. The resins were respectively melted by use of separate extruders with extrusion amounts set at intermediate layer: front and back layers = 3:1 and temperatures set in the range of 210 to 230˚C for the intermediate layer and in the range of 220 to 240˚C for the front and back layers, merged by a ferrule set at 230˚C, extruded in two-kind three-layer (extrusion amount ratio = 1:6:1), followed by cooling with a cast roll, and thereby an non-stretched film was obtained. The non-stretched film was stretched at 80˚C in a f low direction (MD) to 1.3 times, followed by stretching at 94˚C in a direction perpendicular thereto (TD) to 5.05 times, and thereby a film having a thickness of substantially 50μm (lamination ratio: 1/7/1) was prepared. Results of evaluations of obtained films are shown in Table 2.

(Example 7)

As shown in Table 1, as an intermediate layer, a mixed resin of 45 mass % of a polystyrene series resin: SBS-3 and 55 mass % of a polystyrene series resin: SBS-7 was used, as front and back layers, a polyester series resin: PET-1 was used, and, as an adhesive layer, a styrene-isoprene resin: SIS-1 (styrene-isoprene = 30/70, the peak temperature of the loss elastic modulus = -56˚C: trade name: Kraton D1124, produced by JSR Kraton Polymer Co., Ltd., hereinafter, abbreviated as "SIS-1") was used. The resins were respectively melted by use of separate extruders with extrusion amounts set at the ratio of (intermediate layer) : (adhesive layer): (front and back layers) = 3:1:2 and temperatures set in the range of 210 to 230˚C for the intermediate layer, in the range of 220 to 240˚C for the front and back layers and in the range of 210 to 230˚C for the adhesive layer, merged by a ferrule set at 230˚C, extruded in three-kind five-layer (extrusion amount ratio = 2:1:6:1:2), followed by cooling with a cast roll, and thereby an non-stretched film was obtained. The non-stretched filmwas stretched at 82˚C in a flow direction (MD) to 1.3 times, followed by stretching at 93˚C in a direction perpendicular thereto (TD) to 5.0 times, and thereby a film having a thickness of substantially 50 μm (lamination ratio: 2/1/7/1/2) was prepared. Results of evaluations of obtained films are shown in Table 2.

(Example 8)

As shown in Table 1, as an intermediate layer, a mixed resin of 55 mass % of a polystyrene series resin: SBS-3 and 45 mass % of a polystyrene series resin: SBS-7 was used, as front and back layers, 80 mass % of a polyester series resin: PET-1 and 20 weight percent of a polyester series resin: PET-3 were used, and as an adhesive layer, a styrene-isoprene resin: SIS-1 was used. The resins were respectively melted by use of separate extruders with extrusion amounts set at the ratio of (intermediate layer) : (adhesive layer): (front and back layers) = 3:1:2 and temperatures set in the range of 210 to 230˚C for an intermediate layer, in the range of 220 to 240˚C for front and back layers and in the range of 210 to 230˚C for the adhesive layer, merged by a ferrule set at 230˚C, extruded in three-kind five-layer (extrusion amount ratio = 2:1:6:1:2), followed by cooling with a cast roll, and thereby an non-stretched film was obtained. The non-stretched film was stretched at 82˚C in a flow direction (MD) to 1.3 times, followed by stretching at 93˚C in a direction perpendicular thereto (TD) to 5.0 times, and thereby a film having a thickness of substantially 50μm (lamination ratio: 2/1/7/1/2) was prepared. Results of evaluations of obtained films are shown in Table 2.

(Example 9)

As shown in Table 1, as an intermediate layer, a mixed resin of 45 mass % of a polystyrene series resin: SBS-3 and 55 mass % of a polystyrene series resin: SBS-7 was used, as front and back layers, 27 mass % of a polyester series resin: PET-4 (a dicarboxylic acid residue is made of 70 mole % of terephthalic acid and 30 mole % of isophthalic acid and a glycol component is made of 100 mole % of ethylene glycol), 58 weight percent of a polyester series resin: PET-1 and 15 weight percent of a polyester series resin: PET-3 were used and, as an adhesive layer, a styrene-isoprene resin: SIS-1 was used. The resins were respectively melted by use of separate extruders with extrusion amounts set at the ratio of (intermediate layer) : (adhesive layer): (front and back layers) = 3:1:2 and temperatures set in the range of 210 to 230˚C for an intermediate layer, in the range of 220 to 240˚C for front and back layers and in the range of 210 to 230˚C for the adhesive layer, merged by a ferrule set at 230˚C, extruded in three-kind five-layer (extrusion amount ratio = 2:1:6:1:2), followed by cooling with a cast roll, and thereby an non-stretched film was obtained. The non-stretched film was stretched at 82˚C in a flow direction (MD) to 1.3 times, followed by stretching at 93˚C in a direction perpendicular thereto (TD) to 5.0 times, and thereby a film having a thickness of substantially 50$\mu$m (lamination ratio: 2/1/7/1/2) was prepared. Results of evaluations of obtained films are shown in Table 2.

(Example 10)

As shown in Table 1, as an intermediate layer, a mixed resin of 55 mass % of a polystyrene series resin: SBS-3 and 45 mass % of a polystyrene series resin: SBS-7 was used, as front and back layers, a polyester series resin: PET-1 was used, and as an adhesive layer, a styrene/ethylene/propylene resin: SEPS-1 (styrene/ethylene and propylene = 30/70, the peak temperature of the loss elastic modulus = -55˚C, Septon (trade name; produced by Kuraray Co., Ltd.), hereinafter, abbreviated as "SEPS-1") was used. The resins were respectively melted by use of separate extruders with extrusion amounts set at the ratio of (intermediate layer) : (adhesive layer): (front and back layers) = 3:1:2 and temperatures set in the range of 210 to 230˚C for the intermediate layer, in the range of 220 to 240˚C for the front and back layers and in the range of 210 to 230˚C for the adhesive layer, merged by a ferrule set at 230˚C, extruded in three-kind five-layer (extrusion amount ratio = 2:1:6:1:2), followed by cooling with a cast roll, and thereby an non-stretched film was obtained. The non-stretched film was stretched at 82˚C in a flow direction (MD) to 1.3 times, followed by stretching at 93˚C in a direction perpendicular thereto (TD) to 5.0 times, and thereby a film having a thickness of substantially 50$\mu$m (lamination ratio: 2/1/7/1/2) was prepared. Results of evaluations of obtained films are shown in Table 2.

(Comparative Example 1)

As shown in Table 1, as an intermediate layer, a polystyrene series resin: MS-1 (a rubber-like elastic body-dispersed polystyrene series resin where 8 mass % of a styrene-butadiene copolymer is contained as dispersion particles in a continuous phase of a copolymer made of styrene/methyl methacrylate/butyl acrylate = 56/26/10, MFR4.0, hereinafter, abbreviated as "MS-1") was used and, as front and back layers, a polyester series resin: PET-1 was used. The resins were respectively melted by use of separate extruders with extrusion amounts set at the ratio of (intermediate layer) : (front and back layers)=3:1 and temperatures set in the range of 210 to 235˚C for an intermediate layer and in the range of 220 to 240˚C for front and back layers, merged by a ferrule set at 230˚C, extruded in two-kind three-layer (extrusion amount ratio = 1:6:1), followed by cooling with a cast roll, and thereby an non-stretched film was obtained. The non-stretched film was stretched at 90˚C in a flow direction (MD) to 1.3 times, followed by stretching at 84˚C in a direction perpendicular thereto (TD) to 4.0 times, and thereby a film having a thickness of substantially 50$\mu$m (lamination ratio: 1/7/1) was prepared. Results of evaluations of obtained films are shown in Table 2.

(Comparative Example 2)

As shown in Table 1, as an intermediate layer, a polystyrene series resin: MS-2 (styrene/butyl acrylate= 81/19 mass %, hereinafter, abbreviated as "MS-2") was used and, as front and back layers, a polyester series resin: PET-1 was used. The resins were respectively melted by use of separate extruders with extrusion amounts set at the ratio of (intermediate layer) : (front and back layers) =3:1 and temperatures set in the range of 210 to 220˚C for the intermediate layer and in the range of 220 to 240˚C for the front and back layers, merged by a ferrule set at 230˚C, extruded in two-kind three-layer (extrusion amount ratio = 1:6:1), followed by cooling with a cast roll, and thereby an non-stretched film was obtained. The non-stretched film was stretched at 90˚C in a flow direction (MD) to 1.3 times, followed by stretching at 88˚C in a direction perpendicular thereto (TD) to 4.0 times, and thereby a film having a thickness of substantially 50$\mu$m (lamination ratio: 1/7/1) was prepared. Results of evaluations of obtained films are shown in Table 2.

(Comparative Example 3)

As shown in Table 1, as an intermediate layer, a polystyrene series resin: SBS-6 (styrene-butadiene = 40/60 mass %, the storage elastic modulus at 0˚C E'= 1.6 x $10^8$Pa, the peak temperatures of the loss elastic modulus E"=-80˚C and 78˚C, hereinafter, abbreviated as "SBS-6") was used and, as front and back layers, a polyester series resin: PET-1 was used. The resins were respectively melted by use of separate extruders with extrusion amounts set at the ratio of (intermediate layer): (front and back layers)=3:2 and temperatures set in the range of 200 to 220˚C for the intermediate layer and in the range of 220 to 240˚C for the front and back layers, merged by a ferrule set at 230˚C, extruded in two-kind three-layer (extrusion amount ratio =1:3:1), followed by cooling with a cast roll, and thereby an non-stretched film was obtained. The non-stretched film was stretched at 75˚C in a flow direction (MD) to 1.3 times, followed by stretching at 85˚C in a direction perpendicular thereto (TD) to 4.9 times, and thereby a film having a thickness of substantially 50μm (lamination ratio: 1/4/1) was prepared. Results of evaluations of obtained films are shown in Table 2.

(Comparative Example 4)

As shown in Table 1, as an intermediate layer, a polyester series resin: PET-3 (a soft aliphatic polyester: GS-P1aAZ91T, hereinafter, abbreviatedas "PET-3") was used and, as front and back layers, a polystyrene series resin: SBS-5 was used. The resins were respectively melted by use of separate extruders with extrusion amounts set at the ratio of (intermediate layer) : (front and back layers) =2:1 and temperatures set in the range of 220 to 240˚C for the intermediate layer and in the range of 200 to 220˚C for the front and back layers, merged by a ferrule set at 230˚C, extruded in two-kind three-layer (extrusion amount ratio = 1:4:1), followed by cooling with a cast roll, and thereby an non-stretched film was obtained. The non-stretched film was stretched at 90˚C in a flow direction (MD) to 1.05 times, followed by stretching at 90˚C in a direction perpendicular thereto (TD) to 4.5 times, and thereby a film having a thickness of substantially 50μm (lamination ratio: 1/4/1) was prepared. Results of evaluations of obtained films are shown in Table 2.

[Table 1]

[Table 2]

(Table 1)

| | A Layer | B Layer | Adhesive Layer | $E_B'$ (50) ($\times 10^8$Pa) | $E_B'$ (90) ($\times 10^7$Pa) | $E_A'$ (0) /$E_A'$ (40) | Peak Temperature (°C) | Intersection Point (°C/$\times 10^8$Pa) |
|---|---|---|---|---|---|---|---|---|
| Example 1 | PET-1 (Front and Back Layers) | SBS-1 (Intermediate Layer) | — | 4.26 | 21.2 | 1.09 | 80 | 82/2.59 |
| Example 2 | PET-2 (Front and Back Layers) | SBS-2 (Intermediate Layer) | — | 6.03 | 15.9 | 1.11 | 57 | 58/4.73 |
| Example 3 | PET-1 (Front and Back Layers) | SBS-3/SBS-4=50/50 (Intermediate Layer) | — | 11.4 | 21.9 | 1.09 | 80 | 80/3.89 |
| Example 4 | PET-1 (Intermediate Layer) | SBS-5 (Front and Back Layers) | | 11.3 | 24 | 1.09 | 80 | 80/5.31 |
| Example 5 | PET-1 (Front and Back Layers) | SBS-3/SBS-4=50/50 (Intermediate Layer) | SEBS-1 | 11.4 | 21.9 | 1.09 | 80 | 80/3.89 |
| Example 6 | PET-1/PET-3=80/20 (Front and Back Layers) | SBS-3/SBS-7=55/45 (Intermediate Layer) | — | 10.4 | 5.89 | 1.10 | 68 | 69/5.13 |
| Example 7 | PET-1 (Front and Back Layers) | SBS-3/SBS-7=45/55 (Intermediate Layer) | SIS-1 | 9.64 | 9.31 | 1.09 | 80 | 82/1.90 |
| Example 8 | PET-1/PET-3=80/20 (Front and Back Layers) | SBS-3/SBS-7=55/45 (Intermediate Layer) | SIS-1 | 10.4 | 5.89 | 1.10 | 68 | 69/5.13 |
| Example 9 | PET-4/PET-1/PET-3=27/58/15 (Front and Back Layers) | SBS-3/SBS-7=45/55 (Intermediate Layer) | SIS-1 | 9.64 | 9.31 | 1.10 | 69 | 70/4.48 |
| Example 10 | PET-1 (Front and Back Layers) | SBS-3/SBS-7=55/45 (Intermediate Layer) | SEPS-1 | 10.4 | 5.89 | 1.09 | 80 | 83/1.69 |
| Comparative Example 1 | PET-1 (Front and Back Layers) | MS-1 (Intermediate Layer) | — | 14 | 0.633 | 1.09 | — | nothing |
| Comparative Example 2 | PET-1 (Front and Back Layers) | MS-2 (Intermediate Layer) | — | 22.7 | 0.326 | 1.09 | 80 | 62/18 |
| Comparative Example 3 | PET-1 (Front and Back Layers) | SBS-6 (Intermediate Layer) | — | 1.04 | 1.49 | 1.09 | 80 | 88/0.197 |
| Comparative Example 4 | PET-3 (Intermediate Layer) | SBS-5 (Front and Back Layers) | — | 11.3 | 24 | 1.75 | 90 | 88/2.82 |

(Table 2)

| | Thermal Shrinkage Rate (%) MD (70/75/80°C) | Thermal Shrinkage Rate (%) TD (80°C) | Tensile Rupture Elongation (%) 0°C | Tensile Elastic Modulus (MPa) 23°C (MD/TD) | Shrink Finishing Properties | Transparency (%) | Natural Shrinkage (%) | Sealing Strength (N/15 mm width) |
|---|---|---|---|---|---|---|---|---|
| Example 1 | 0.0/-0.7/-1.0 | 51 | 360 | 1470/2890 | ◎ | 2.8 | 0.41 | 2.9 |
| Example 2 | 0.0/0.5/2.1 | 52 | 230 | 2350/3870 | ○ | 2.3 | 0.38 | 2.1 |
| Example 3 | 0.0/0.5/1.7 | 50 | 260 | 1430/1990 | ◎ | 2.9 | 0.44 | 2.8 |
| Example 4 | 0.8/1.0/-0.5 | 53 | 420 | 1680/3840 | ○ | 3.3 | 0.26 | 2.6 |
| Example 5 | 0.0/0.4/1.5 | 48 | 270 | 1530/2630 | ◎ | 3.2 | 0.37 | 5.4 |
| Example 6 | 0.0/0.5/2.0 | 51 | 250 | 1470/2010 | ◎ | 3 | 0.44 | 2.7 |
| Example 7 | 0.0/0.4/1.5 | 50 | 260 | 1530/2620 | ◎ | 3.2 | 0.41 | 5.1 |
| Example 8 | 0.0/0.5/2.1 | 50 | 250 | 1490/2700 | ◎ | 3 | 0.4 | 5.4 |
| Example 9 | 0.0/0.5/1.0 | 49 | 240 | 1470/2550 | ◎ | 3.4 | 0.4 | 5.3 |
| Example 10 | 0.0/0.5/1.0 | 50 | 230 | 1460/2450 | ◎ | 3.4 | 0.42 | 5.5 |
| Comparative Example 1 | 2.0/4.0/-1.0 | 55 | 230 | 1680/2940 | × | 3.2 | 0.48 | 1.9 |
| Comparative Example 2 | 2.0/5.0/-1.0 | 55 | 120 | 1720/2470 | × | 2.7 | 0.43 | 1.7 |
| Comparative Example 3 | 4.0/6.0/-1.0 | 56 | 390 | 1050/1880 | ○ | 2.5 | 0.67 | 3.1 |
| Comparative Example 4 | 0.0/-1.0/-2.0 | 34 | 380 | 1270/1390 | ◎ | 6.2 | 1.74 | 3.1 |

From Table 2, films of the invention, in all of examples 1 to 10, were excellent in the shrinkability at low-temperatures, had the stiffness (nerve) and rupture-resistance and were excellent in the shrink finishing quality. In contrast, the film of comparative example 1, which has a composition same as that of a film described in JP-A No. 2002-351332, neither satisfying the expression (III) in the film of the invention nor having an intersection point of the storage elastic modulus curve, was poor in the shrink finishing quality in comparison with the film of the inventions. Furthermore, the film of comparative example 2, which has a composition same as that of a film described in JP-A No. 07-137212, does not satisfy the expression (III) in the film of the invention, has an intersection point of the storage elastic modulus curve on a lower temperature side than the peak temperature and has a larger loss elastic modulus at the intersection, was poor in the shrink finishing quality and the rupture-resistance in comparison with the films of the invention. Still furthermore, the film of comparative example 3, which has a composition same as that of a film described in JP-A No. 61-41543 and does not satisfy the expression (III) in the film of the invention, was poor in the stiffness (nerve) and large in the natural shrinkage in comparison with the film of the inventions. Furthermore, the film of comparative example 4, which does not satisfy the expression (I) in the film of the invention, was smaller in the stiffness in comparison with the films of the invention films and rather larger in the natural shrinkage.
From these, it is found that the films of the invention have the low-temperature shrinkability, excellent stiffness and shrink finishing quality and smaller natural shrinkage.

Industrial Applicability

The films of the invention, having predetermined viscoelastic characteristics in a polyester series resin layer and a polystyrene series resin layer, are excellent in the low-temperature shrinkability, stiffness, rupture-resistance and shrink finishing quality, and can be used as various kinds of molded products, in particular, as heat-shrinkable labels.

## Claims

1.  A heat-shrinkable laminated film that is made of at least three layers with an A layer mainly constituted of a polyester series resin and a B layer mainly constituted of a polystyrene series resin, respectively used as front and back layers and an intermediate layer or an intermediate layer and front and back layers and is stretched at least in monoaxial direction, **characterized by** having features (1) to (4) below:

    (1) A peak temperature of the loss elastic modulus ($E_A"$) of a resin that constitutes an A layer exists at least one in the range of 50˚C or more and 90˚C or less and the storage elastic moduli ($E_A'$) at 0˚C and 40˚C of the resin that constitutes the A layer satisfy an expression (I) below,

    $$E_A'(0)/E_A'(40) \leqq 1.2 \quad ... \quad Expression \ (I)$$

    (Herein, $E_A'(0)$ and $E_A'(40)$, respectively, express storage elastic moduli at 0˚C and 40˚C of the resin that constitutes the A layer.),
    (2) The storage elastic moduli ($E_B'$) at 50˚C and 90˚C of the resin that constitutes the B layer satisfy expressions (II) and (III) below,

    $$E_B'(50) \geqq 1.5 \ x \ 10^8 Pa \quad ... \quad Expression \ (II)$$

    $$E_B'(90) \geqq 5.0 \ x \ 10^7 Pa \quad ... \quad Expression \ (III)$$

    (Herein, $E_B'(50)$ and $E_B'(90)$, respectively, express storage elastic moduli at 50˚C and 90˚C of the resin that constitutes the B layer.),
    (3) Storage elastic modulus curves of $E_A'$ and $E_B'$ intersect with each other, and
    (4) The thermal shrinkage ratio in a main shrinking direction of the film when the film is dipped in a hot water at 80˚C for 10 sec is 30% or more and 60% or less, and the thermal shrinkage ratio in a direction perpendicular to the main shrinking direction of the film is -5% or more and +5% or less in the range of 70˚C or more and 80˚C or less.

2.  Theheat-shrinkable laminated film according to claim 1, wherein the storage elastic modulus curves of the $E_A'$ and $E_B'$ intersect between a temperature lower by 10˚C than a peak temperature of the loss elastic modulus ($E_A"$) of a resin constituting the A layer and 90˚C, and the loss elastic modulus at the intersection is in the range of $1.0 \ x \ 10^8 Pa$ or more and $1.0 \ x \ 10^9 Pa$ or less.

3.  The heat-shrinkable laminated film according to claim 1 or 2, wherein the A layer is front and back layers and the B layer is an intermediate layer.

4.  The heat-shrinkable laminated film according to any one of claims 1 to 3, wherein the polyester series resin is a polyester resin constituted of a dicarboxylic acid residue and a diol residue, a copolymer polyester resin, a polylactate series polymer, or a mixture thereof.

5. The heat-shrinkable laminated film according to any one of claims 1 to 4, wherein the polyester series resin is a polyester resin constituted of a dicarboxylic acid residue and a diol residue, in which at least one of the dicarboxylic acid residue and diol residue is constituted of at least two kinds of residues, and, among the at least two kinds of the residues, a total content of the residues excluding the most abundant residue is 10 mole % or more and 40 mole % or less to the sum (200 mole %) of the total amount (100 mole %) of the dicarboxylic acid residue and the total amount (100 mole %) of the diol residue.

6. The heat-shrinkable laminated film according to claim 4 or 5, wherein the dicarboxylic acid residue is at least one kind of residue selected from a group consisting of a terephthalic acid residue, an isophthalic acid residue, a 1,4-cyclohexane dicarboxylic acid residue, a succinic acid residue, an adipic acid residue and a 2, 6-naphthalene dicarboxylic acid residue, and the diol residue is at least one kind of residue selected from a group consisting of an ethyleneglycol residue, a 1,2-propylene glycol residue, a 1,4-butanediol residue, a neopentyl glycol residue, a diethylene glycol residue, a polytetramethylene glycol residue and a 1,4-cyclohexane dimethanol residue.

7. The heat-shrinkable laminated film according to any one of claims 1 to 6, wherein the polystyrene series resin is a copolymer of a styrene series hydrocarbon and a conjugate dien series hydrocarbon and a content of the copolymer in the entire B layer is 50 mass % or more.

8. The heat-shrinkable laminated film according to any one of claims 1 to 7, wherein at least one layer of an adhesive layer is disposed between the A layer and the B layer.

9. A molded product employing the heat-shrinkable laminated film as defined in any one of claims 1 to 8 as the base material.

10. A heat-shrinkable label employing the heat-shrinkable laminated film as defined in any one of claims 1 to 8 as the base material.

11. A container provided with the molded product as defined in claim 9 or the heat-shrinkable label as defined in claim 10.

# FIG. 1

**INTERNATIONAL SEARCH REPORT**

| International application No. |
| --- |
| PCT/JP2005/020754 |

A.  CLASSIFICATION OF SUBJECT MATTER
*B32B27/30*(2006.01), *B29C61/06*(2006.01), *B32B27/36*(2006.01), *B65D25/36* (2006.01), *B65D65/40*(2006.01), *G09F3/04*(2006.01)

According to International Patent Classification (IPC) or to both national classification and IPC

B.  FIELDS SEARCHED

Minimum documentation searched (classification system followed by classification symbols)
B29D9/00, B32B1/00-35/00

Documentation searched other than minimum documentation to the extent that such documents are included in the fields searched
Jitsuyo Shinan Koho        1922-1996   Jitsuyo Shinan Toroku Koho   1996-2006
Kokai Jitsuyo Shinan Koho  1971-2006   Toroku Jitsuyo Shinan Koho   1994-2006

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| A | JP 2002-351332 A  (Fuji Seal, Inc.), 06 December, 2002 (06.12.02), Claim 1; Par. Nos. [0002], [0009] to [0012], [0017], [0020] (Family: none) | 1-11 |
| A | JP 61-41542 A  (Asahi Chemical Industry Co., Ltd.), 27 February, 1986 (27.02.86), Clams 1, 7; page 7, upper right column, line 14 to lower right column, line 13; page 8, upper left column, line 16 (Family: none) | 1-11 |

| ☒ | Further documents are listed in the continuation of Box C. | ☐ | See patent family annex. |

| * | Special categories of cited documents: |
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| 07 February, 2006 (07.02.06) | 14 February, 2006 (14.02.06) |

| Name and mailing address of the ISA/ Japanese Patent Office | Authorized officer |
| --- | --- |
| Facsimile No. | Telephone No. |

Form PCT/ISA/210 (second sheet) (April 2005)

**INTERNATIONAL SEARCH REPORT**

| International application No. |
| --- |
| PCT/JP2005/020754 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2004-91712 A  (Asahi Kasei Chemicals Corp.), 25 March, 2004 (25.03.04), Claims 1, 7; Par. Nos. [0001], [0044], [0045], [0094]; table 3 (Family: none) | 1-11 |
| A | JP 2002-52672 A  (Mitsubishi Plastics, Inc.), 19 February, 2002 (19.02.02), Claim 1; Par. No. [0005]; Figs. 1, 2 (Family: none) | 1-11 |
| A | JP 11-138708 A  (Mitsubishi Plastics, Inc.), 25 May, 1999 (25.05.99), Par. No. [0030]; table 2 (Family: none) | 1-11 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 61041543 A
- JP 7137212 A
- JP 2002351332 A